# EUROPÄISCHE PATENTSCHRIFT

(11) **EP 3 497 502 B1**
(45) Veröffentlichungstag und Bekanntmachung des Hinweises auf die Patenterteilung: **26.10.2022**
(21) Anmeldenummer: 17764334.3
(22) Anmeldetag: 16.08.2017
(51) Int. Cl.: G02B 21/00, G01N 21/64, G02B 21/36

(54) **LICHTBLATTMIKROSKOP**
LIGHT SHEET MICROSCOPE
MICROSCOPE À FEUILLE DE LUMIÈRE

(30) Priorität: 15.08.2016 LU 93178
(43) Veröffentlichungstag der Anmeldung: 19.06.2019
(73) Patentinhaber: Leica Microsystems CMS GmbH, 35578 Wetzlar (DE)
(72) Erfinder: FAHRBACH, Florian, 69115 Heidelberg (DE)
(74) Vertreter: Schaumburg und Partner Patentanwälte mbB
(86) Internationale Anmeldenummer: PCT/EP2017/070789
(87) Internationale Veröffentlichungsnummer: WO 2018/033582

(56) Entgegenhaltungen:
- WO-A1-2014/056992
- WO-A1-2017/109156
- WO-A2-2011/059826
- DE-A1-102008 009 216
- DE-A1-102009 044 984

## Beschreibung

Die Erfindung betrifft ein Lichtblattmikroskop, umfassend eine Beleuchtungseinheit mit einer Strahlquelle, die ausgebildet ist, einen längs einer Beleuchtungsachse propagierenden Beleuchtungsstrahl auf eine Probe zu richten, ein Lichtblatterzeugungsmittel, das ausgebildet ist, aus dem Beleuchtungsstrahl eine die Probe in einem Teilbereich beleuchtende lichtblattartige Beleuchtungslichtverteilung zu erzeugen, und eine Detektionseinheit mit einem Detektor, der ausgebildet ist, Detektionslicht zu erfassen, das aus dem mit der Beleuchtungslichtverteilung beleuchteten Teilbereich der Probe stammt.

Insbesondere in der Fluoreszenzmikroskopie kommen in jüngerer Zeit Mikroskopierverfahren zur Anwendung, bei denen die Probe mit einer flächig oder linienförmig ausgedehnten Lichtverteilung beleuchtet wird. Beispiele hierfür sind unter den Bezeichnungen SPIM (Single Plane Illumination Microscopy), OPM (Oblique Plane Microscopy) und SCAPE (Swept Confocally-Aligned Planar Excitation) bekannte Mikroskopierverfahren. So wird etwa bei einem SPIM-Mikroskop ein Beleuchtungslichtbündel z.B. mit Hilfe einer Zylinderlinse nur in einer Richtung fokussiert und somit aufgeweitet, wodurch die Probe mit einem Lichtblatt oder einer Lichtscheibe beleuchtet wird, die innerhalb der Probe nur eine Probenebene ausleuchtet. Ein SPIM-Mikroskop weist für die Beleuchtung und die Detektion probenseitig zwei separate Objektive auf, deren optische Achsen senkrecht zueinander verlaufen. Die abzubildende Probenebene liegt senkrecht zur optischen Achse des Detektionsobjektivs. Die Beleuchtung dieser Probenebene erfolgt durch das Lichtblatt, welches das Beleuchtungsobjektiv senkrecht zur optischen Achse des Detektionsobjektivs in die Probe einstrahlt.

Demgegenüber wird bei dem SCAPE-Verfahren ein einziges probenseitiges Objektiv sowohl zur Beleuchtung als auch zur Detektion verwendet. Die Beleuchtung erfolgt mit einem schräg zur optischen Achse des Objektivs liegenden Lichtblatt. Infolge dieser Schrägstellung des Lichtblatts weist ein SCAPE-Mikroskop üblicherweise eine mit dem Objektiv zusammenwirkende Aufrichtungsoptik mit schräg zueinander gestellten Teiloptiken auf, die über eine Zwischenabbildung dafür sorgen, dass der mit dem schräggestellten Lichtblatt beleuchtete Probenbereich lagerichtig und weitgehend optisch korrigiert auf den Detektor abgebildet wird.

Zur näheren Erläuterung der vorstehend genannten SPIM-, OPM- und SCAPE-Verfahren wird beispielhaft verwiesen auf die Veröffentlichungen Kumar, S. et al., Highspeed 2D and 3D fluorescence microscopy of cardiac myocytes. Opt. Express 19, 13839 (2011); Dunsby, C., Optically sectioned imaging by oblique plane microscopy, Opt. Express 16, 20306-20316 (2008) und Bouchard, M.B. et al., Swept confocally-aligned planar excitation (SCAPE) microscopy for high speed volumetric imaging of behaving organisms, Nat. Photonics 9, 113-119 (2015) sowie auf die Patentdokumente US 8582203 B2 und US 8619237 B2.

Ein verwandtes Mikroskopierverfahren, das jedoch ohne Aufrichtungsoptik auskommt, ist das sogenannte HILO-Verfahren (Higly Inclined And Laminated Optical Sheet). Hierzu wird verwiesen auf Tokunaga, M., Imamoto, N. & Sakata-Sogawa, K., Highly inclined thin illumination enables clear single-molecule imaging in cells., Nat. Methods 5, 159-161 (2008).

In der DE 10 2011 000 835 B4 wird das für eine Schrägbeleuchtung der Probe vorgesehene Lichtblatt mit Hilfe einer Scaneinheit erzeugt, die sich in einer zur rückwärtigen Fokusebene des Beleuchtungsobjektivs konjugierten Ebene befindet. Das zu detektierende Fluoreszenzlicht wird zwischen dem Objektiv und der Scaneinheit ausgekoppelt.

Zum Stand der Technik wird ferner auf die WO 2015/109323 A2 verwiesen, die u.a. einen Mikroskopaufbau zeigt, bei dem ein dichroitischer Spiegel zur Trennung des zu detektierenden Fluoreszenzlichts einem Scanspiegel in Lichtrichtung nachgeordnet ist, so dass das Fluoreszenzlicht von dem Scanspiegel direkt entscannt wird. Dieser Aufbau entspricht weitgehend dem Aufbau eines punktscannenden Konfokalmikroskops. Er unterscheidet sich von diesem jedoch zum einen dadurch, dass der Beleuchtungsstrahl schwach fokussiert und schräg in die Probe gerichtet ist. Zum anderen wird das aus dem schrägen, gegen die Fokusebene des Objektivs verlaufenden Linienfokus aufgesammelte Fluoreszenzlicht mit einer Aufrichtungsoptik aufgerichtet. Dadurch kann Bildinformation entlang der beleuchteten Linie mit Hilfe eines Zeilensensors gewonnen werden. Da der Scanspiegel sowohl zum Scannen der Probe mit dem Beleuchtungsstrahl als auch zum Entscannen des detektierten Fluoreszenzlichtes verwendet wird, kann ein ortsfester Detektor eingesetzt werden.

Bei den aus dem Stand der Technik bekannten lichtblattmikroskopischen Verfahren kann es insbesondere dann, wenn die Fokusoptik der Detektionseinheit nicht mit der beleuchteten Probenebene zusammenfällt, zu starken Helligkeitsunterschieden innerhalb des aufgenommenen Bildes kommen. So ist beispielsweise in OPM- und SCAPE-Verfahren die beleuchtete Probenebene schräg zur Fokusebene des für die Beleuchtung und die Detektion gemeinsam vorgesehenen Objektivs angeordnet. Somit werden bei der Bildaufnahme sowohl oberflächennahe Probenbereiche als auch tiefliegende Probenbereiche abgebildet. Je tiefer nun der Beleuchtungsstrahl in die Probe eindringt, desto stärker wird er durch Streuung und/oder Absorption geschwächt. Diejenigen Bereiche des resultierenden Bildes, die tieferliegenden und damit schwächer beleuchteten Probenbereichen zugeordnet sind, weisen deshalb eine geringere Helligkeit auf als Bildbereiche, in denen oberflächennahe Schichten der Probe abgebildet sind.

In der weiter oben angegebenen Veröffentlichung von Bouchard et al. wird zur Lösung dieses Problems vorgeschlagen, in dem Detektionsstrahlengang einen Filter einzubringen, der besonders helle Bereiche so stark abschwächt, dass eine weitgehend homogene Helligkeitsverteilung entsteht. Damit ist aber eine vergleichsweise grobe Abschwächungskompensation möglich.

Aus dem Stand der Technik sind ferner eine Reihe weiterer Verfahren bekannt, die darauf abzielen, in dem aufgenommenen Bild Helligkeitsunterschiede infolge von Streuung und/oder Absorption des Beleuchtungslichtes zu vermeiden. Beispielhaft wird verwiesen auf Dean, K. & Fiolka, R.: Uniform and scalable light-sheets generated by extended focusing, Opt. Express 22, 26141-26152 (2014); Chmielewski, A. K. et al.: Fast imaging of live organisms with sculpted light sheets, Sei. Rep. 5, (2015); Zong, W. et al.: Large-field high-resolution two-photon digital scanned light-sheet microscopy, Cell Res. 25, 254-257 (2015); Hoebe, R. A. et al.: Controlled light-exposure microscopy reduces photobleaching and phototoxicity in fluorescence live-cell imaging. Nat. Biotechnol. 25, 249-253 (2007).

Jedoch ist die technische Realisierung dieser Verfahren häufig aufwändig. Außerdem sind sie nicht in jedem Fall in der Lichtblattmikroskopie anwendbar.

Ein Lichblattmikroskop nach dem Oberbegriff des Anspruchs 1 ist aus der Druckschrift DE 10 2008 009 216 A1 bekannt. Dieses Lichtblattmikroskop ist mit einer Beleuchtungseinheit versehen, die von entgegengesetzten Seiten her zwei Lichtblätter in eine Probenebene einstrahlt, die von einem Objektiv auf einen Detektor abgebildet wird. Die beiden Lichtblätter werden interferometrisch so überlagert, dass in der Lichtblattebene eine Beleuchtungslichtverteilung in Form eines Interferenzmusters entsteht. Die Druckschrift DE 10 2009 044 984 A1 offenbart ein Lichtblattmikroskop mit einer Beleuchtungseinheit, die ein Lichtblatt in eine Probenebene einstrahlt. Die Beleuchtungseinheit umfasst ein Zoomelement, mittels dessen die Ausdehnung des Lichtblattes in Richtung der Detektionsachse stufenlos variierbar ist. Ferner ermöglicht das Zoomelement eine stufenlose Verschiebung des Beleuchtungsfokus im Probenbereich.

Aufgabe der Erfindung ist es, ein Lichtblattmikroskop und ein Verfahren zur mikroskopischen Abbildung einer Probe anzugeben, die es ermöglichen, durch Abschwächung des Beleuchtungsstrahls verursachte Helligkeitsunterschiede innerhalb eines Bildes vermeiden.

Die Erfindung löst diese Aufgabe durch das Lichtblattmikroskop nach Anspruch 1 und das Verfahren nach Anspruch 15. Vorteilhafte Weiterbildungen sind in den abhängigen Ansprüchen sowie in der folgenden Beschreibung angegeben.

Die Beleuchtungseinheit des erfindungsgemäßen Lichtblattmikroskops weist ein Strahlmodulationsmittel auf, das ausgebildet ist, den Beleuchtungsstrahl längs der Beleuchtungsachse, d.h. längs einer die Strahlausbreitungsrichtung definierenden Achse, derart zu modulieren, dass die Belichtung des mit der Beleuchtungslichtverteilung beleuchteten Teilbereichs der Probe längs der Beleuchtungsachse variiert. Die Belichtung des jeweiligen Teilbereichs der Probe kann durch Änderung der Beleuchtungsstärke und damit der Intensität des Beleuchtungsstrahls und/oder durch Änderung der Belichtungsdauer, während der der Teilbereich der Probe dem Beleuchtungsstrahl ausgesetzt ist, variiert werden. Diese Belichtungsvariation längs der Beleuchtungsachse kann planmäßig so gewählt werden, dass sich über das detektierte Bildfeld eine möglichst konstante Helligkeit ergibt.

Vorzugsweise wird der Beleuchtungsstrahl längs der Beleuchtungsachse so moduliert, dass die Belichtung des mit der Beleuchtungslichtverteilung beleuchteten Teilbereichs der Probe längs der Beleuchtungsachse zunimmt.

Vorzugsweise ist das Strahlmodulationsmittel ausgebildet, einen Schärfentiefenbereich oder Fokus des Beleuchtungsstrahls längs der Beleuchtungsachse zu verschieben. Indem der Schärfentiefenbereich des Beleuchtungsstrahls längs der Beleuchtungsachse verschiebbar ist, lässt sich die Intensität und/oder die Belichtungsdauer für jede Position auf der Beleuchtungsachse so einstellen, dass in dieser Position die Probe mit der gewünschten Lichtmenge beleuchtet wird.

Vorzugsweise weist das Strahlmodulationsmittel ein längs der Beleuchtungsachse verschiebbares Beleuchtungsobjektiv aus. In dieser Ausführungsform wird also die Verschiebung des Schärfentiefenbereichs des Beleuchtungsstrahls über eine außerhalb der Strahlquelle angeordnete optische Komponente realisiert.

In einer alternativen Ausführung enthält das Strahlenmodulationsmittel eine in der Strahlquelle enthaltene durchstimmbare Linse zum Verschieben des Schärfentiefenbereichs des Beleuchtungsstrahls. Mittels einer solchen durchstimmbaren Linse, deren optische Wirkung variabel steuerbar ist, lässt sich in besonders einfacher Weise der Beleuchtungsstrahl so beeinflussen, dass dessen Schärfentiefenbereich längs der Beleuchtungsachse bewegt wird.

In einer weiteren alternativen Ausgestaltung weist das Strahlmodulationsmittel ein in der Strahlquelle enthaltenes optisches Element zur Beeinflussung der optischen Weglänge des Beleuchtungsstrahls auf. Dieses optische Element umfasst beispielsweise mehrere, wahlweise in einen Strahlengang des Beleuchtungsstrahls einbringbare transparente Blöcke, die längs der Beleuchtungsachse unterschiedlich dick sind. Das optische Element ist z.B. als eine mittels eines entsprechenden Antriebs senkrecht zur Beleuchtungsachse verschiebbare Scheibe ausgeführt, an der die transparenten Blöcke derart angeordnet sind, dass wahlweise einer dieser Blöcke in den Strahlengang des Beleuchtungsstrahls eingebracht wird, wenn die Scheibe senkrecht zur Beleuchtungsachse verschoben wird. In einer anderen Ausgestaltung können die die Weglänge des Beleuchtungsstrahls verändernden transparenten Blöcke auch auf einer Scheibe angeordnet sein, die um eine zur Beleuchtungsachse parallele Drehachse drehbar ist.

In einer besonders bevorzugten Ausführung ist das Strahlmodulationsmittel ausgebildet, die Intensität des Beleuchtungsstrahls in Abhängigkeit der Position des Schärfentiefenbereichs längs der Beleuchtungsachse zu modulieren. Hierbei ist insbesondere die achsennahe Intensität des Beleuchtungsstrahls gemeint, die der Leistung entspricht, die sich bei Integration der Strahlintensität über einen räumlich begrenzten radialen Bereich um die Beleuchtungsachse bzw. die Lichtausbreitungsachse ergibt. Dabei wird beispielsweise die den Beleuchtungsstrahl erzeugende Laserlichtquelle synchron mit der Verschiebung des Schärfentiefenbereichs entsprechend gesteuert. In einer Ausführungsform, in der die Verschiebung des Schärfentiefenbereichs damit einhergeht, dass der Beleuchtungsstrahl zunehmend tiefer in die Probe eindringt, ist das Strahlmodulationsmittel so ausgebildet, dass es die Intensität des Beleuchtungsstrahls mit zunehmender Eindringtiefe des Schärfentiefenbereichs in die Probe erhöht.

Insbesondere kann das Strahlmodulationsmittel so ausgeführt sein, dass es die Intensität des Beleuchtungsstrahls mit zunehmender Eindringtiefe des Schärfentiefenbereichs in die Probe erhöht. Damit kann in besonders einfacher Weise eine Abschwächung des Beleuchtungsstrahls infolge von Streuung und/oder Absorption kompensiert werden.

Zusätzlich oder alternativ kann das Strahlmodulationsmittel auch so ausgeführt sein, dass es die Verschiebegeschwindigkeit des Schärfentiefenbereichs des Beleuchtungsstrahls in Abhängigkeit von dessen Position längs der Beleuchtungsachse variiert. Diese Variation der Verschiebegeschwindigkeit korrespondiert mit einer Variation der Belichtungszeit am Ort des gerade abzubildenden Probenbereichs.

Insbesondere ist das Strahlmodulationsmittel vorzugsweise ausgebildet, die Verschiebegeschwindigkeit des Schärfentiefenbereichs des Beleuchtungsstrahls mit zunehmender Eindringtiefe in die Probe zu verringern, um die Belichtungszeit entsprechend zu erhöhen.

Das Strahlmodulationsmittel kann auch als Strahlformoptik ausgebildet sein, die zur Modulation des Beleuchtungsstrahls längs der Beleuchtungsachse dessen radiales Intensitätsprofil in mindestens einer Richtung senkrecht zur Beleuchtungsachse beeinflusst.

Die Strahlformoptik ist beispielsweise ausgebildet, die Transmission des Beleuchtungsstrahls in Abhängigkeit des radialen Abstands von der Beleuchtungsachse so einzustellen, dass die Intensität des Beleuchtungsstrahls längs der Beleuchtungsachse zunimmt.

Die Strahlformoptik umfasst beispielsweise zwei phasenmodulierende Elemente, von denen ein erstes Element die Phase des Beleuchtungsstrahls derart einstellt, dass der Beleuchtungsstrahl an dem zweiten Element eine Amplitude mit einem vorbestimmten, vorzugsweise radial ansteigenden Profil aufweist. In dieser Ausführungsform können etwaige Lichtverluste, die mit der Erzeugung des gewünschten Intensitätsprofils einhergehen, gering gehalten werden.

Die phasenmodulierenden Elemente können auch an einem einstückigen Bauelement ausgebildet sein, wobei der an dem ersten phasenmodulierenden Element reflektierte Beleuchtungsstrahl über einen Spiegel auf das zweite phasenmodulierende Element zurückgeführt wird. Diese Ausführung ermöglicht einen besonders kompakten Aufbau.

In einer Ausführungsform ist die Strahlformoptik ausgebildet, dem Beleuchtungsstrahl eine linear proportional mit dem radialen Abstand von der Beleuchtungsachse aufsteigende oder absteigende Phase aufzuprägen. Insbesondere ist die Strahlformoptik vorzugsweise ausgebildet, aus dem Beleuchtungsstrahl mindestens einen Bessel-Strahl oder mindestens einen Mathieu-Strahl zu formen.

Ein Bessel-Strahl, der beispielsweise mittels eines Axicons generiert werden kann, hat die Eigenschaft, nichtbeugend und selbstrekonstruierend zu sein. Letzteres bedeutet, dass ein Bessel-Strahl, wenn er an einem Punkt längs der Beleuchtungsachse etwa durch ein Streuzentrum teilweise gestört oder blockiert wird, in seinem weiteren Verlauf seine Form wiedergewinnt. Damit ist die Beleuchtung mit einem Bessel-Strahl insbesondere in streuenden und/oder absorbierenden Proben von großem Vorteil. Dies gilt insbesondere für OPM- und SCAPE-Anwendungen, in denen die beleuchtete Probenebene gegenüber der detektierten Fokusebene verkippt ist, wodurch das Detektionslicht, das zu dem resultierenden Bild beiträgt, sowohl aus oberflächennahen Regionen als auch aus tiefliegenden Regionen der Probe stammt.

Die Verwendung eines Bessel-Strahls hat weitere neben der erreichbaren höheren Auflösung und besseren Eindringtiefe Vorteile. Ein solcher Vorteil ist z.B. darin zu sehen, dass ein Bessel-Strahl aufgrund seines schmalen Winkelspektrums keiner sphärischen Aberration unterliegt.

Auch die Verwendung eines Mathieu-Strahls ist von Vorteil. Ein solcher ist wie ein Bessel-Strahl nichtbeugend und weist ähnliche Eigenschaften und damit ähnliche Vorteile auf. Bekanntlich hat jedoch ein Mathieu-Strahl ein Querschnittsprofil, das von dem Profil eines Bessel-Strahls abweicht. Ein Mathieu-Strahl kann beispielsweise erzeugt werden, dass indem ein Axicon mit einem im Querschnitt elliptischen Gauß-Strahl beleuchtet wird.

Die Bessel- und Mathieu-Strahlen können in einfacher Weise in ihrem axialen Profil, also der Intensität in einem schmalen Streifen entlang der optischen Achse, moduliert werden, indem diesem Strahlabschnitt aus radialer Richtung, also von außerhalb dieses Streifens, Licht zugeführt wird. Dies ist möglich, da diese Strahlen gemessen an ihrer Schärfentiefe ein breites Winkelspektrum aufweisen, also Beiträge bei vergleichsweise großen radialen Komponenten aufweisen.

Selbstverständlich ist mit den hier genannten Strahlen immer eine lineare und nichtlineare Fluoreszenzanregung möglich.

In einer weiteren bevorzugten Ausführungsform enthält die Strahlformoptik eine Blendenanordnung, die ausgebildet ist, den Strahlquerschnitt des Beleuchtungsstrahls zu beschneiden. Insbesondere ein Bessel-Strahl kann auf diese Weise in eine für die Lichtblattmikroskopie besonders vorteilhafte Strahlform gebracht werden. So ist vor allem in einer OPM-Anwendung ein solcher Strahl, der im Weiteren als geschnittener Bessel-Strahl bezeichnet wird, wie auch ein Mathieu-Strahl besonders vorteilhaft nutzbar. So kann ein geschnittener Bessel-Strahl oder ein Mathieu-Strahl näher am Rand der Objektivpupille platziert werden, so dass der Überlapp mit dem Detektionsbereich entsprechend geringer ist. Im Ergebnis kann so eine größere effektive Detektionsapertur oder eine größere effektive Beleuchtungsapertur genutzt werden. Ein geschnittener Bessel-Strahl kann beispielsweise mit Hilfe eines Axicons und einer nachgeordneten Schlitzblende erzeugt werden.

Vorzugsweise enthält die Strahlformoptik mindestens einen räumlichen Lichtmodulator, kurz SLM, der ausgebildet ist, das radiale Intensitätsprofil des Beleuchtungsstrahls zu generieren. Dieser Lichtmodulator kann ausgebildet sein, zur Erzeugung des gewünschten Strahlprofils die Intensität des Beleuchtungsstrahls zu modulieren. Es ist jedoch auch möglich, dass der Lichtmodulator die Phase oder gleichzeitig die Phase und die Intensität moduliert. Der Lichtmodulator ist beispielsweise in Form eines konvexen oder konkaven Axicons, eines Gitters, eines Hologramms oder eines verformbaren Spiegels realisierbar. Er kann als ferromagnetischer SLM oder als LCoS-SLM ausgeführt sein. Auch eine Kombination mehrerer solcher Elemente kann als Lichtmodulator genutzt werden.

In einer speziellen Ausführungsform weist die Strahlquelle eine anamorphotische Optik als Lichtblatterzeugungsmittel auf. Eine solche anamorphotische Optik, die beispielsweise in Form einer Zylinderlinse ausgeführt sein kann, weitet den Beleuchtungsstrahl nur in einer der beiden senkrecht zur Beleuchtungsachse liegenden Richtungen auf. In dieser Ausführungsform wird das Lichtblatt demnach statisch erzeugt.

In einer alternativen Ausgestaltung weist die Strahlquelle ein erstes Abtastelement als Lichtblatterzeugungsmittel auf, wobei dieses erste Abtastelement ausgebildet ist, den Beleuchtungsstrahl längs einer ersten Abtastachse zu bewegen. Durch diese Bewegung des Beleuchtungsstrahls wird das Lichtblatt dynamisch aufgebaut.

Eine weitere bevorzugte Ausgestaltung umfasst ein für die Beleuchtungseinheit und die Detektionseinheit gemeinsam vorgesehenes zweites Abtastelement, das ausgebildet ist, den Beleuchtungsstrahl längs einer zweiten Abtastachse zu bewegen, die senkrecht zu der vorgenannten ersten Abtastachse liegt. Dieses zweite Abtastelement wirkt somit sowohl auf den Beleuchtungsstrahl als auch auf das Detektionslicht. Letzteres wird dadurch längs der zweiten Abtastachse entscannt. Dies bedeutet, dass durch die Rückführung des Detektionslichtes auf das zweite Abtastelement die dem Beleuchtungsstrahl durch das Abtastelement vermittelte Scanbewegung in Bezug auf das Detektionslicht im Sinne einer Gegenwirkung aufgehoben wird, was zur Folge hat, dass das Detektionslicht mittels eines ortsfesten Detektors erfasst werden kann.

In den vorstehend erläuterten Ausführungsformen, in denen das Detektionslicht längs der ersten Abtastachse nicht entscannt wird, ist der Detektor vorzugsweise als Flächendetektor ausgeführt.

In einer besonders bevorzugten Ausführung weist der Flächensensor eine Vielzahl von Sensorelementen auf, die derart ansteuerbar sind, dass zu einem gegebenen Zeitpunkt jeweils nur ein Teil der Sensorelemente nach Art eines beweglichen, vorzugsweise streifenförmigen Verschlusses aktiv geschaltet ist. In dieser Ausführung ist der Flächensensor also mit einer Rolling-Shutter-Funktion versehen. Er kann demnach wie ein entlang einer Abtastachse bewegter Zeilensensor genutzt werden.

Eine weitere alternative Ausführungsform weist eine für die Beleuchtungseinheit und die Detektionseinheit gemeinsam vorgesehene Abtasteinheit auf, die ausgebildet ist, den Beleuchtungsstrahl längs einer ersten Abtastachse und längs einer zweiten Abtastachse zu bewegen, die senkrecht zur ersten Abtastachse liegt. Diese Ausführungsform wird das Detektionslicht längs beider Abtastachsen entscannt. Dabei kann die Abtasteinheit aus zwei separaten Abtastelementen gebildet sein, von denen ein erstes für die Abtastung längs der ersten Abtastachse und ein zweites für die Abtastung längs der zweiten Abtastachse sorgt. Es ist jedoch ebenso möglich, nur ein einziges Abtastelement vorzusehen, das beide Abtastbewegungen ausführt.

Die vorstehend genannten Abtastelemente können jeweils als Galvanometerspiegel oder als mikroelektromechanischer Spiegel (MEMS) ausgeführt sein. Auch die Verwendung eines akustooptischen Deflektors (AOD) ist möglich. Je nach Anwendung werden die genannten Abtastelemente dann als 1D-Scanner oder 2D-Scanner genutzt.

Vorzugsweise enthält die Strahlquelle eine Lichtquelle, die je nach Anwendung geeignetes Laserlicht abgibt, z.B. gepulstes Laserlicht, breitbandiges Laserlicht oder Licht, das speziell zur nichtlinearen Fluoreszenzanregung geeignet ist.

Die Erfindung wird im Folgenden anhand von Ausführungsbespielen unter Bezugnahme auf die Figuren beschrieben. Darin zeigen:
- Figur 1: eine erste Ausführungsform eines Mikroskops, auf das die Erfindung anwendbar ist, in einem y-z-Schnitt;
- Figur 2: das Mikroskop gemäß erster Ausführungsform in einem x-z-Schnitt;
- Figur 3: eine zweite Ausführungsform eines Mikroskops, auf das die Erfindung anwendbar ist, in einem y-z-Schnitt;
- Figur 4: das Mikroskop gemäß zweiter Ausführungsform in einem x-z-Schnitt;
- Figur 5: eine dritte Ausführungsform eines Mikroskops, auf das die Erfindung anwendbar ist, in einem y-z-Schnitt;
- Figur 6: die dritte Ausführungsform des Mikroskops gemäß dritter Ausführungsform in einem x-z-Schnitt;
- Figur 7: eine vierte Ausführungsform eines Mikroskops, auf das die Erfindung anwendbar ist, in einem y-z-Schnitt;
- Figur 8: die vierte Ausführungsform des Mikroskops in einem x-z-Schnitt;
- Figur 9: eine erfindungsgemäße Strahlquelle zur Erzeugung eines Lichtblatts;
- Figur 10: eine alternative Ausführungsform einer Strahlquelle zur Erzeugung eines Lichtblatts;
- Figur 11: eine erfindungsgemäße Strahlquelle zur Erzeugung eines Bessel-Strahls;
- Figur 12: eine schematische Darstellung, welche die Funktionsweise eines in der Strahlquelle nach Figur 11 verwendeten konvexen Axicons zeigt;
- Figur 13: eine schematische Darstellung, welche die Funktionsweise eines alternativ verwendbaren konkaven Axicons zeigt;
- Figur 14: eine schematische Darstellung einer Blendenanordnung, die in der Strahlquelle zur Erzeugung von geschnittenen Bessel-Strahlen verwendbar ist;
- Figur 15: eine schematische Darstellung, die eine alternative Blendenanordnung zur Erzeugung geschnittener Bessel-Strahlen zeigt;
- Figur 16: eine schematische Darstellung, die eine weitere alternative Blendenanordnung zur Erzeugung geschnittener Bessel-Strahlen zeigt;
- Figur 17: eine erfindungsgemäße Strahlquelle zur Erzeugung von Mathieu-Strahlen;
- Figur 18: eine erfindungsgemäße Strahlquelle zur Erzeugung eines Beleuchtungsstrahls mit axial verschiebbarem Schärfentiefenbereich;
- Figur 19: eine alternative Strahlquelle zur Erzeugung eines Beleuchtungsstrahls mit axial verschiebbarem Schärfentiefenbereich;
- Figur 20: eine Pupillendarstellung, welche die Objektivpupille und die Detektionspupille bei Verwendung eines Bessel-Strahls zeigt;
- Figur 21: eine Pupillendarstellung, welche die Objektivpupille und die Detektionspupille bei Verwendung eines Mathieu-Strahlen oder eines geschnittenen Bessel-Strahls zeigt;
- Figur 22: eine schematische Schnittansicht, die den Überlapp zwischen dem Beleuchtungsstrahl und einem Detektionskegel bei Verwendung eines GaußStrahls zeigt;
- Figur 23: den Überlapp zwischen Beleuchtungsstrahl und Detektionskegel bei Verwendung eines Gauß-Strahls in einer anderen Schnittansicht;
- Figur 24: eine schematische Schnittansicht, die den Überlapp zwischen dem Beleuchtungsstrahl und dem Detektionskegel bei Verwendung eines geschnittenen Bessel-Strahl oder eines Mathieu-Strahls zeigt;
- Figur 25: den Überlapp zwischen Beleuchtungsstrahl und Detektionskegel bei Verwendung eines geschnittenen Bessel-Strahls oder eines Mathieu-Strahls in einer anderen Schnittansicht;
- Figur 26: eine schematische Darstellung, die einen axialen Schärfentiefenbereich des Beleuchtungsstrahls zeigt;
- Figur 27: eine schematische Darstellung, welche die erfindungsgemäße Verschiebung des Schärfentiefenbereichs des Beleuchtungsstrahls veranschaulicht;
- Figur 28: eine schematische Darstellung, welche die erfindungsgemäße Variation der Intensität des Beleuchtungslichtstrahls in Abhängigkeit der Position des Schärfentiefenbereichs veranschaulicht;
- Figur 29: eine schematische Darstellung, welche die erfindungsgemäße Variation der Verschiebegeschwindigkeit des Schärfentiefenbereichs des Beleuchtungslichtstrahls in Abhängigkeit von dessen Position veranschaulicht;
- Figur 30: eine schematische Darstellung zur Veranschaulichung, wie durch die erfindungsgemäße Beeinflussung des radialen Profils des Beleuchtungsstrahls die axiale Intensität zur Abschwächungskompensation gesteuert werden kann;
- Figur 31: eine erfindungsgemäße Strahlquelle zur Erzeugung eines Beleuchtungsstrahls mit absorptionskompensierendem Strahlprofil;
- Figur 32: eine weitere erfindungsgemäße Strahlquelle zur Erzeugung eines Beleuchtungsstrahls mit absorptionskompensierendem Strahlprofil;
- Figur 33: eine weitere erfindungsgemäße Strahlquelle zur Erzeugung eines Beleuchtungsstrahls mit absorptionskompensierendem Strahlprofil;
- Figur 34: eine erfindungsgemäße Ausführungsform, die einen Flächendetektor mit Rolling-Shutter-Funktion aufweist, in einem x-y-Schnitt;
- Figur 35: die Ausführungsform nach Figur 34 in einem y-z-Schnitt;
- Figur 36: eine weitere Ausführungsform, die einen Flächendetektor mit Rolling-Shutter-Funktion aufweist, in einem x-y-Schnitt; und
- Figur 37: die Ausführungsform nach Figur 36 in einem y-z-Schnitt.

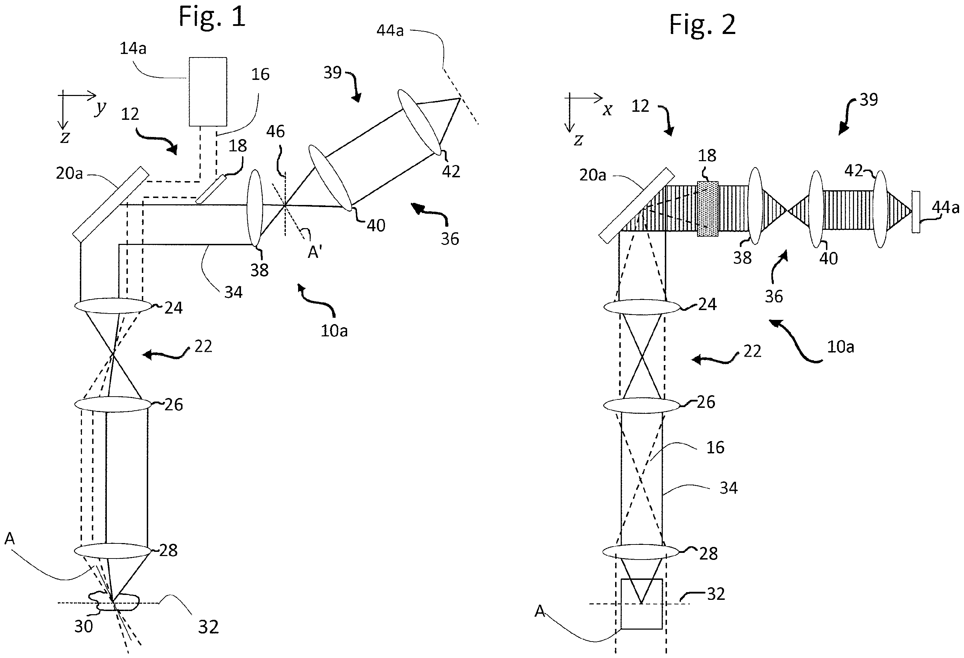

Im Folgenden werden unter Bezugnahme auf die Figuren 1 bis 8 zunächst verschiedene Ausführungsformen eines Lichtblattmikroskops erläutert, auf das die erfindungsgemäße Strahlmodulation anwendbar ist. Diesen verschiedenen Ausführungsformen ist gemein, dass sie für die Beleuchtung und die Detektion jeweils ein gemeinsames Objektiv aufweisen, d.h. ein Objektiv, durch das sowohl das fluoreszenzanregende Beleuchtungslicht als auch das durch die ausgelöste Fluoreszenzstrahlung repräsentierte Detektionslicht geleitet wird. Diese Ausführungsformen arbeiten demnach nach Art eines SCAPE- oder eines OPM-Mikroskops. Es ist jedoch an dieser Stelle ausdrücklich darauf hinzuweisen, dass die Erfindung auch auf Lichtblattmikroskope anwendbar ist, die separate Objektive für die Beleuchtung und die Detektion vorsehen, wie dies etwa für ein SPIM-Mikroskop der Fall ist.

In den Figuren 1 und 2 ist ein Lichtblattmikroskop 10a als erste Ausführungsform gezeigt. Die Figuren 1 und 2 nehmen Bezug auf ein orthogonales Koordinatensystem mit den Achsen x, y und z, wobei Figur 1 einen Schnitt in der y-z-Ebene und Figur 2 einen Schnitt in der x-z-Ebene zeigt.

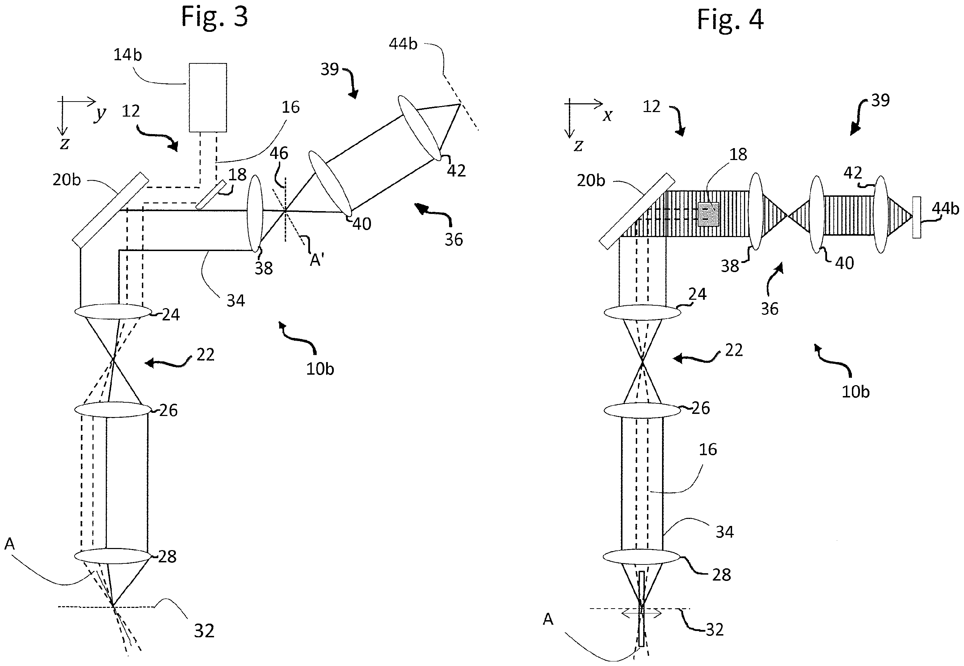

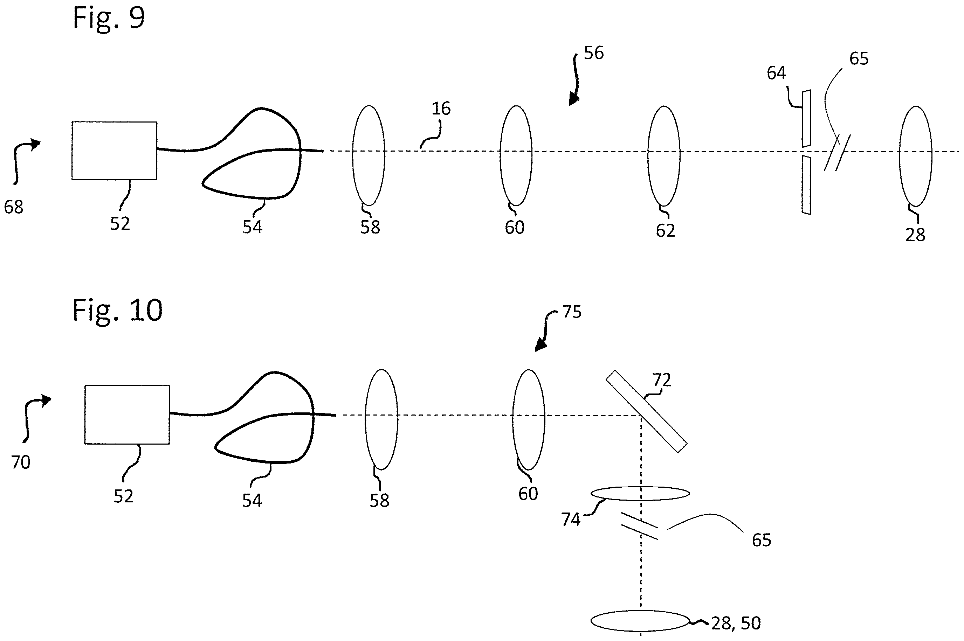

Das Lichtblattmikroskop 10a weist eine Beleuchtungseinheit 12 mit einer Strahlquelle 14a auf, die ausgebildet ist, einen Beleuchtungsstrahl 16 auszusenden. In der vorliegenden Ausführungsform enthält die Strahlquelle 14a eine in den Figuren 1 und 2 nicht explizit gezeigte anamorphotische Optik, z.B. eine Zylinderlinse, die den Beleuchtungslichtstrahl 16 zu einer lichtblattartigen Beleuchtungslichtverteilung formt, die im Weiteren einfach als Lichtblatt bezeichnet wird. Beim Austritt aus der Strahlquelle 14a bildet das Lichtblatt eine parallel zur y-z-Ebene ausgerichtete flächige Lichtverteilung. Die erfindungsgemäße technische Realisierung der in den Figuren 1 und 2 gezeigten Strahlquelle 14a (sowie der weiteren Strahlquellen gemäß den Figuren 3 bis 8) wird weiter unten anhand einer Reihe von Ausführungsbeispielen unter Bezugnahme auf die Figuren 9 bis 37 im Detail erläutert.

Die Strahlquelle 14a emittiert den Beleuchtungsstrahl 16 auf einen Umlenkspiegel 18, der den Beleuchtungsstrahl 16 in Richtung eines 1D-Scanspiegels 20a reflektiert. Der 1D-Scanspiegel 20a ist beispielsweise als Galvanometerspiegel oder MEMS-Spiegel ausgeführt und um die x-Achse, die in Figur 1 senkrecht zur Zeichenebene verläuft, mittels eines in den Figuren nicht explizit gezeigten Antriebs verkippbar. Durch diese Verkippung versetzt der 1D-Scanspiegel 20a den Beleuchtungsstrahl 16 in einer zur y-Achse parallelen Richtung. Der 1D-Scanspiegel 20a wird deshalb im Weiteren als y-Scanspiegel bezeichnet.

Der y-Scanspiegel 20a reflektiert den Beleuchtungsstrahl 16 in Richtung einer Optik 22, die aus einer Scanlinse 24 und einer Tubuslinse 26 zusammengesetzt ist und ein Teleskop bildet. Die Optik 22 richtet den Beleuchtungsstrahl 16 auf ein Objektiv 28, welches dann eine Probe 30 mit dem Beleuchtungsstrahl 16 beleuchtet. Zur Vereinfachung der Darstellung ist die Probe 30 nur in Figur 1 gezeigt.

Der y-Scanspiegel 20a ist in dem Beleuchtungsstrahlengang so angeordnet, dass er sich in einer zu einer rückwärtigen Fokusebene des Objektivs 28 konjugierten Ebene befindet. Der y-Scanspiegel 20a, die Optik 22 und das Objektiv 28 bilden so ein telezentrisches System. Das Teleskop bestehend aus den Linsen 24 und 26 ist nicht zwingend erforderlich, wenn das Objektiv 28 baulich derart ausgeführt ist, dass der Scanspiegel 20a direkt in dessen Pupille platziert werden kann.

Wie in Figur 1 gezeigt, fällt der Beleuchtungsstrahl 16 so auf den y-Scanspiegel 20a, dass er längs der y-Achse versetzt in das Objektiv 28 eingestrahlt wird. Der Beleuchtungsstrahl 16 leuchtet demnach nur einen außermittigen Teilbereich der Eintrittspupille des Objektivs 28 aus, wodurch er innerhalb der Probe 30 verkippt gegenüber der optischen Achse des Objektivs 28 propagiert. Der das Lichtblatt formende und damit flächige Beleuchtungsstrahl 16 breitet sich im Probenvolumen entlang einer Beleuchtungsebene A aus und regt dort Fluoreszenz an. Die Beleuchtungsebene A, welche die in der Probe beleuchtete Fläche definiert, wird durch die Beleuchtungsachse, d.h. die Ausbreitungsrichtung des Beleuchtungsstrahls 16, und die x-Achse aufgespannt (vgl. Fig. 2). In den Figuren 1 und 2 bezeichnet das Bezugszeichen 32 die probenseitige Fokusebene des Objektivs 28.

Indem der y-Scanspiegel 20a um die x-Achse verkippt wird, kann die gegenüber der optischen Achse schräg gestellte Beleuchtungsebene A zur Aufnahme von Bildstapeln innerhalb der Probe 30 parallel zur y-Achse verschoben werden.

Die durch den Beleuchtungsstrahl 16 ausgelöste Fluoreszenzstrahlung, im Weiteren als Detektionslicht 34 bezeichnet, gelangt wiederum in das Objektiv 28, das demnach sowohl als Beleuchtungsobjektiv als auch als Detektionsobjektiv fungiert. Das Detektionslicht 34 fällt nach Durchtritt durch die Optik 22 auf den y-Scanspiegel 20a, der das Detektionslicht 34 so reflektiert, dass dieser den Umlenkspiegel 18 passiert und in eine Aufrichtungsoptik 36 gelangt. Die Aufrichtungsoptik 36 enthält zwei weitere Objektive 38 und 40 sowie eine Tubuslinse 42, der ein Flächendetektor 44a nachgeordnet ist. Durch die Rückführung auf den y-Scanspiegel 20a wird das Detektionslicht 34 in Richtung der y-Achse entscannt. Dies bedeutet, dass die dem Beleuchtungsstrahl 16 durch den y-Scanspiegel 20a vermittelte Scanbewegung, durch welche die Beleuchtungsebene A gleichsam durch die Probe 30 bewegt wird, durch die Rückführung des Detektionslichts 34 auf den y-Scanspiegel 20a im Sinne einer Gegenwirkung aufgehoben wird. Dies hat zur Folge, dass die Beleuchtungsebene A stets ortsfest auf den Flächendetektor 44a abgebildet wird. Somit erfolgt die Bildaufnahme ebenenweise, d.h. sämtliche Pixel des Flächendetektors 44a werden gleichzeitig beleuchtet. Die vorstehend genannten Komponenten 20a, 22, 28, 36 und 44a bilden eine allgemein mit 39 bezeichnete Detektionseinheit.

Die Aufrichtungsoptik 36 hat die Funktion, die Beleuchtungsebene A im Wege einer Zwischenabbildung auf eine ortsfeste Ebene A' abzubilden. Die ebene A' ist gegenüber einer Ebene 46 schräg gestellt, die optisch konjugiert zu der Fokusebene 32 ist.

Wie in den Figuren 1 und 2 gezeigt, sind die beiden Objektive 38 und 40 der Aufrichtungsoptik 36 schräg zueinander angeordnet. Diese Schrägstellung der Objektive 38 und 40 bewirkt, dass die Ebene A' lagerichtig auf den Flächendetektor 44 abgebildet wird. Wie vorstehend erläutert, ist durch die entscannende Wirkung des y-Scanspiegel 20a zudem gewährleistet, dass die Beleuchtungsebene A über das ortsfeste Zwischenbild A' ortsfest auf den Flächendetektor 44 abgebildet wird.

An dieser Stelle ist darauf hinzuweisen, dass die Darstellung des Detektionsstrahlengangs in Figur 2, die den x-z-Schnitt zeigt, stark vereinfacht ist. Tatsächlich verläuft der zwischen dem y-Scanspiegel 20a und dem Objektiv 38 liegende Teil des Detektionsstrahlengangs senkrecht zur Zeichenebene der Figur 2, während der daran in Richtung des Flächendetektors 44 anschließende Teil des Detektionsstrahlengangs schräg aus der Zeichenebene der Figur 2 heraus verläuft.

In den Figuren 3 und 4 ist in einem y-z-Schnitt bzw. einem x-z-Schnitt ein Lichtblattmikroskop 10b dargestellt, das eine erfindungsgemäße Abwandlung der Ausführungsform nach den Figuren 1 und 2 repräsentiert.

Das Lichtblattmikroskop 10b ist gegenüber dem in den Figuren 1 und 2 gezeigten Mikroskop 10a dahingehend abgewandelt, dass die lichtblattartige Beleuchtungslichtverteilung, die vor Eintritt in das Objektiv 28 eine zur x-z-Ebene parallele, flächige Lichtverteilung darstellt, nicht mittels einer in der Strahlquelle angeordneten anamorphotischen Optik, sondern mittels eines Scanspiegels erzeugt wird, der den Beleuchtungsstrahl 16 in einer Richtung parallel zur x-Achse bewegt und so gleichsam ein virtuelles Lichtblatt aufbaut. Im Vergleich zu der in den Figuren 1 und 2 dargestellten Ausführungsform ist die vorstehend genannte Abwandlung bei dem Lichtblattmikroskop 10b nach den Figuren 3 und 4 dadurch realisiert, dass die Strahlquelle 14a durch eine modifizierte Strahlquelle 14b, der y-Scanspiegel 20a durch einen 2D-Scanspiegel 20b und der Flächendetektor 44a durch einen Zeilendetektor 44b ersetzt ist. Im Übrigen stimmen die Funktionskomponenten des Lichtblattmikroskops 10b mit denen des zuvor beschriebenen Mikroskops 10a überein. Diese Funktionskomponenten sind mit den in den Figuren 1 und 2 verwendeten Bezugszeichen versehen und werden im Folgenden nicht nochmals erläutert. Entsprechendes gilt alle weiteren Figuren, die auf jeweils zuvor beschriebene Figuren Bezug nehmen.

Die modifizierte Strahlquelle 14b enthält keine anamorphotische Optik zur Lichtblatterzeugung. Der Aufbau des Lichtblatts wird bei dem Lichtblattmikroskop 10b vielmehr durch den 2D-Scanspiegel 20b bewirkt. Dieser ist sowohl um die x-Achse als auch um die y-Achse verkippbar und wird im Weiteren als xy-Scanspiegel bezeichnet. Dabei dient die Verkippung des xy-Scanspiegels 20b um die y-Achse dazu, das Lichtblatt in der x-z-Ebene aufzubauen. Insoweit übernimmt der in den Figuren 3 und 4 gezeigte xy-Scanspiegel 20b die Funktion, welche bei dem Lichtblattmikroskop 10a gemäß den Figuren 1 und 2 die in der Strahlquelle 14a enthaltene anamorphotische Optik erfüllt. Demgegenüber wird durch die Verkippung des xy-Scanspiegels 20b um die x-Achse wiederum ein Versatz des Beleuchtungsstrahls 16 längs der y-Achse bewirkt. Dieser Versatz wird wie in der Ausführungsform nach den Figuren 1 und 2 auch bei dem Lichtblattmikroskop 10b dazu genutzt, die Beleuchtungsebene A durch die Probe 30 zu bewegen und so eine Aufnahme von Bildstapeln zu ermöglichen.

Indem das aus der Probe stammende Detektionslicht auf den xy-Scanspiegel 20b zurückgeführt wird, erfolgt auch bei dem Lichtblattmikroskop 10b ein Entscannen des Detektionslichts 34. Im Unterschied zum Lichtblattmikroskop 10a, in dem das Detektionslicht 34 lediglich in Richtung y-Achse entscannt wird, erfolgt in der in den Figuren 3 und 4 dargestellten Ausführungsform das Entscannen sowohl in Richtung der y-Achse als auch in Richtung der x-Achse. Dementsprechend ist bei dem Lichtblattmikroskop 10b der in den Figuren 1 und 2 gezeigte Flächendetektor 44a durch einen Zeilendetektor 44b ersetzt. Somit erfolgt bei dem Lichtblattmikroskop 10b die Bildaufnahme im Wege einer konfokalen Liniendetektion.

Der Zeilendetektor 44b kann dabei auch mehr als eine Zeile aufweisen, insbesondere wenn eine Time delay integratration (TDI)-Funktionalität aufweist, bei der das Signal der Pixel-Zeilen synchron mit dem relativ zum Sensor bewegten Bild verschoben und aufaddiert wird, um Verschmierungsartefakte zu vermeiden.

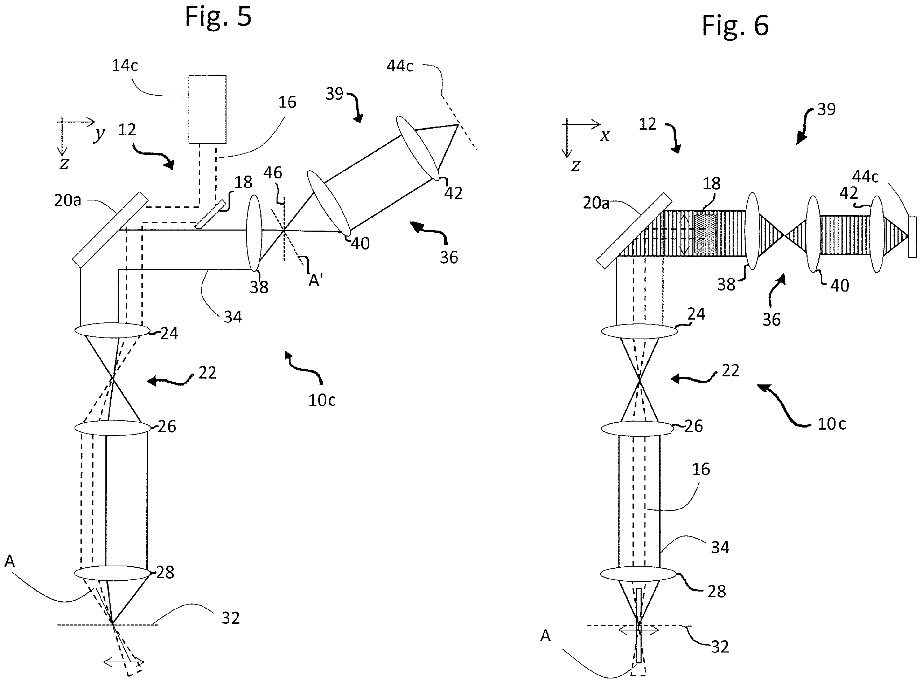

Die Figuren 5 und 6 zeigen ein Lichtblattmikroskop 10c als weitere Ausführungsform in einem y-z-Schnitt bzw. x-z-Schnitt. Im Vergleich zu dem in den Figuren 1 und 2 dargestellten Lichtblattmikroskop 10a ist die Abwandlung nach den Figuren 5 und 6 dadurch realisiert, dass die Strahlquelle 14a durch eine modifizierten Strahlquelle 14c und der Flächendetektor 44a durch einen modifizierten Flächendetektor 44c ersetzt ist.

Während bei dem Lichtblattmikroskop 10a die Strahlquelle 14a eine anamorphotische Optik zur Erzeugung des parallel zur x-z-Ebene liegenden Lichtblatts aufweist, verfügt die modifizierte Strahlquelle 14c des Lichtblattmikroskops 10c zu diesem Zweck über einen in den Figuren 5 und 6 nicht explizit dargestellten x-Scanspiegel, der um die y-Achse verkippbar ist. Wie in der in den Figuren 3 und 4 dargestellten Ausführungsform wird also auch bei dem Lichtblattmikroskop 10c nach den Figuren 5 und 6 der Beleuchtungsstrahl 16 in der x-z-Ebene bewegt, um gleichsam ein virtuelles Lichtblatt aufzubauen.

Da jedoch bei dem Lichtblattmikroskop 10c nach den Figuren 5 und 6 der x-Scanspiegel in der Strahlquelle 14c angeordnet ist, wirkt er nicht auf das Detektionslicht 34. Letzteres wird also nur auf den y-Scanspiegel 20a zurückgeführt, der das Detektionslicht 34 in Richtung der y-Achse entscannt. Ein Entscannen des Detektionslichts 34 in Richtung der x-Achse findet also bei dem Lichtblattmikroskop 10b nicht statt. Dementsprechend ist wie bei dem in den Figuren 1 und 2 gezeigten Lichtblattmikroskop 10a und im Unterschied zu dem in den Figuren 3 und 4 dargestellten Lichtblattmikroskop 10b ein Flächendetektor 44c vorgesehen. Im Unterschied zu dem Lichtblattmikroskop 10a, das ebenfalls über den Flächendetektor 44a verfügt, ist jedoch bei dem Lichtblattmikroskop 10c eine zeilenweise Bildaufnahme mittels des Flächendetektors 44c möglich. Diese zeilenweise Bildaufnahme kann beispielsweise dadurch realisiert werden, dass der Flächendetektor 44c über eine Rolling-Shutter-Funktion verfügt, die mit der Ansteuerung des in der Strahlquelle 14c enthaltenen x-Scanspiegels synchronisiert ist.

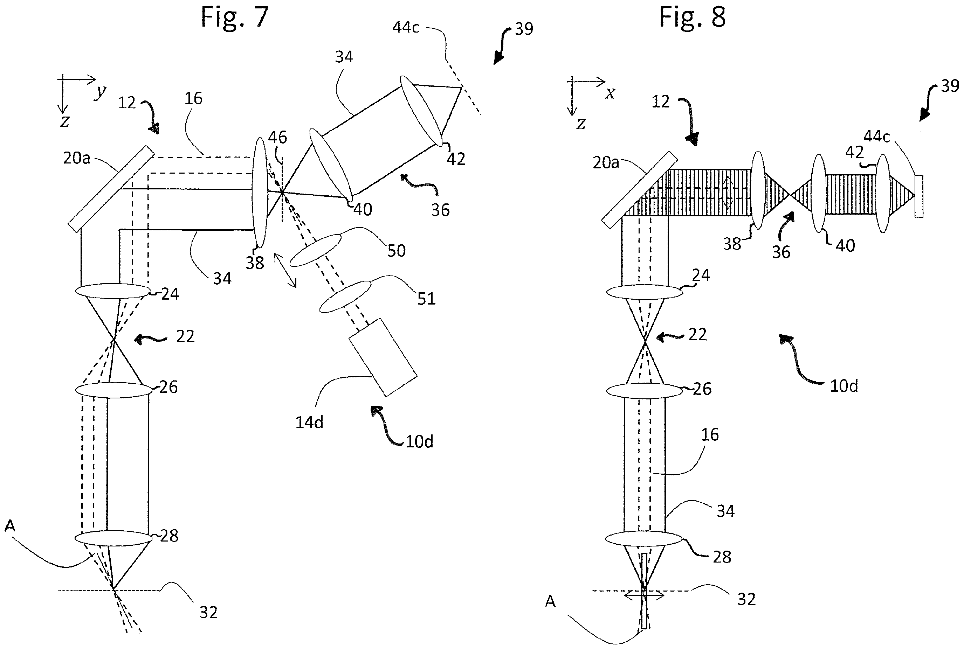

Die Figuren 7 und 8 zeigen ein Lichtblattmikroskop 10d als weitere Ausführungsform in einem y-z-Schnitt bzw. einem x-z-Schnitt. Das Lichtblattmikroskop 10d stellt eine Abwandlung gegenüber dem in den Figuren 5 und 6 dargestellten Mikroskop 10c dar. Diese Abwandlung besteht darin, dass die Strahlquelle 14d, die wie bei dem Lichtblattmikroskop 10c über einen x-Scanspiegel zum Aufbau eines virtuellen, parallel zur x-z-Ebene ausgerichteten Lichtblatts verfügt, den Beleuchtungsstrahl 16 auf ein zusätzliches Beleuchtungsobjektiv 50 aussendet, das beispielsweise mittels eines Piezoantriebs längs der optischen Achse des Beleuchtungsstrahlengangs verschiebbar ist, wie in Figur 7 durch den Doppelpfeil angedeutet ist. Das Beleuchtungsobjektiv 50 koppelt den Beleuchtungsstrahl 16 im Bereich der Ebene 46 in den Beleuchtungsstrahlengang ein. Wie weiter oben erwähnt, liegt die Ebene 46 optisch konjugiert zur Fokusebene 32. Indem das Beleuchtungsobjektiv 50 axial bewegt wird, verschiebt sich der Schärfentiefenbereich des in der Probe 30 liegenden Lichtblatts längs der Beleuchtungsebene A. Zwischen dem Beleuchtungsobjektiv 50 und der Strahlquelle 14d befindet sich eine Tubuslinse 51.

Im Übrigen stimmt das Lichtblattmikroskop 10d im Wesentlichen mit der in den vorstehend erläuterten Ausführungsformen überein.

Im Weiteren werden verschiedene Ausführungsformen von erfindungsgemäßen Strahlquellen beschrieben, die in den in den Figuren 1 bis 8 dargestellten Lichtmikroskopanordnungen und entsprechenden Anordnungen eingesetzt werden können.

Figur 9 zeigt in rein schematischer Darstellung eine Strahlquelle 68, die beispielsweise in dem Lichtblattmikroskops 10a gemäß den Figuren 1 und 2 als Strahlquelle 14a verwendet werden kann. In diesem Ausführungsbeispiel enthält die Strahlquelle 68 eine Laserlichtquelle 52, eine Faserkopplung 54, eine Strahlformoptik 56 und eine Schlitzblende 64 mit variabler Blendenöffnung. Die Strahlformoptik 56 umfasst zwei gegeneinander verschiebbare Linsen 58, 60, die einen Strahlaufweiter bilden, und eine Zylinderlinse 62. Die Strahlformoptik 56 bildet auf die Schlitzblende 64 ab.

Zwischen der Schlitzblende 64 und dem Beleuchtungsobjektiv 28 können 4f-Systeme in beliebiger Zahl angeordnet werden, wie in Figur 9 durch die beiden mit 65 bezeichneten Linien angedeutet ist. Nimmt man beispielhaft auf die in den Figuren 1 und 2 gezeigte Anordnung Bezug, so kann ein solches 4f-System dazu genutzt werden, die Schlitzblende 64 auf den y-Scanspiegel 20a abzubilden. Der y-Scanspiegel 20a wird dann über ein weiteres 4f-System, das in den Figuren 1 und 2 aus der die Scanlinse 24 und die Tubuslinse 26 umfassenden Optik 22 gebildet ist, in die Eintrittspupille des Beleuchtungsobjektivs 28 abgebildet.

In der in Figur 9 gezeigten Anordnung sind sämtliche optische Elemente 58, 60, 62 und 28 telezentrisch angeordnet, d.h. im Abstand der Summe ihrer Brennweiten.

Die Schlitzblende 64 ist im Fokus der Zylinderlinse 62 und damit in einer zur Pupille des Objektivs 28 konjugierten Ebene angeordnet. Sie dient der Anpassung der effektiven numerischen Apertur des Beleuchtungsstrahls 16. Somit kann über die Schlitzblende 64 die Dicke und die Schärfentiefe des Lichtblatts eingestellt werden.

Die Ausführungsform nach Figur 9 ist rein beispielhaft zu verstehen und kann in vielfacher Weise abgewandelt werden. So ist es beispielsweise möglich, in der Strahlquelle 52 eine weitere Schlitzblende in einer zur Fokusebene des Beleuchtungsobjektivs 28 konjugierten Ebene anzuordnen. Diese weitere Schlitzblende dient dann gleichsam der lateralen Beschneidung des Lichtblatts und damit der Anpassung der Breite des durch das Lichtblatt beleuchteten Probenbereichs auf die Breite des von dem Flächendetektor 44a aufgenommenen Bildfeldes. Unter Bezugnahme auf Figur 2 ist damit eine Beschneidung des Lichtblatts in Richtung der x-Achse gemeint.

Figur 10 zeigt wiederum in rein schematischer Darstellung eine Strahlquelle 70, die beispielsweise in dem Lichtblattmikroskop 10c gemäß den Figuren 5 und 6 als Strahlquelle 14c oder in dem Lichtblattmikroskop 10d gemäß den Figuren 7 und 8 als Strahlquelle 10d verwendbar ist.

Während die in Figur 9 dargestellte Strahlquelle 68 die Zylinderlinse 62 zur Erzeugung des Lichtblatts aufweist, enthält die Strahlquelle 70 gemäß Figur 10 zum Zwecke der Lichtblatterzeugung anstelle der Zylinderlinse 62 einen x-Scanspiegel 72, der (unter Bezugnahme auf die Figuren 5 bis 8) um die y-Achse verkippbar ist, sowie eine dem x-Scanspiegel 72 nachgeordnete Scanlinse 74. Durch Verkippen des x-Scanspiegels um die y-Achse wird der Beleuchtungsstrahl 16 in der x-z-Ebene bewegt, um so ein virtuelles Lichtblatt aufzubauen. Die Linsen 58, 60, der x-Scanspiegel 72 und die Scanlinse 74 bilden eine Strahlformoptik 75.

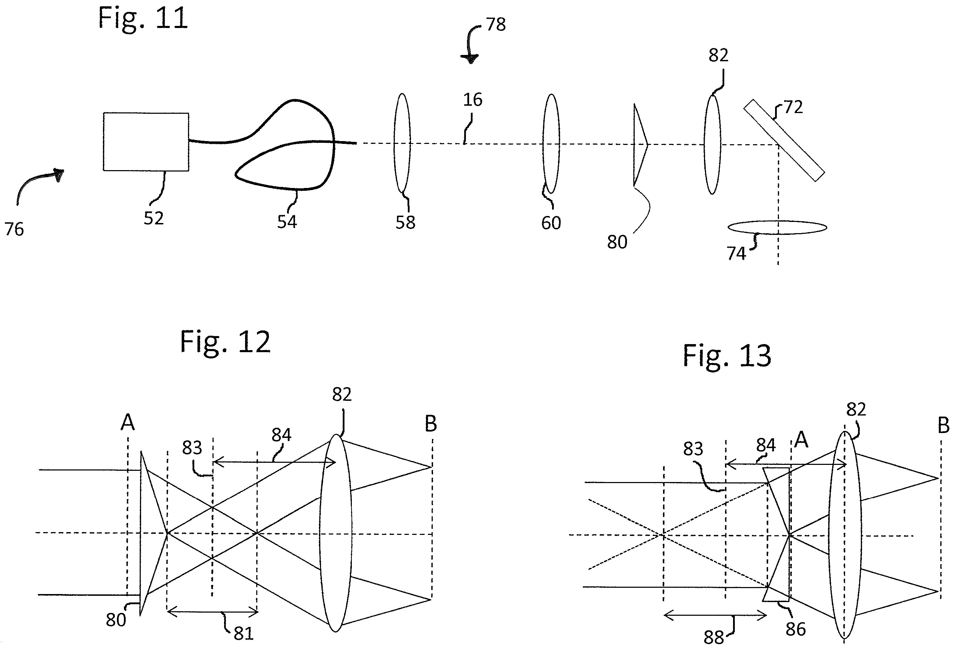

Figur 11 zeigt eine Strahlquelle 76, die eine Abwandlung gegenüber der in Figur 10 dargestellten Strahlquelle 70 repräsentiert. Die Strahlquelle 76 weist eine Strahlformoptik 78 auf, die ausgebildet ist, den Beleuchtungsstrahl 16 in Form eines Bessel-Strahls zu erzeugen. Hierzu enthält die Strahlformoptik 78 neben dem aus den beiden Linsen 58, 60 gebildeten Strahlaufweiter ein konvexes Axicon 80 sowie eine weitere, dem Axicon 80 nachgeordnete Linse 82 auf. Das Axicon 80 kann als refraktives oder diffraktives Bauelement oder als Hologramm auf einem räumlichen Lichtmodulator oder als verformbarer Spiegel ausgeführt sein. Das Axicon 80 dient dazu, die Phase des Beleuchtungsstrahls 16 in Abhängigkeit des Abstands von der optischen Achse zu ändern. Die Funktionsweise des Axicons 80 ist in der schematischen Darstellung nach Figur 12 näher veranschaulicht.

In der Darstellung nach Figur 12 bezeichnet ein Doppelpfeil 81 einen rautenförmigen Bereich, innerhalb dessen das Intensitätsmaximum des durch das Axicon 80 erzeugten Bessel-Strahls lokalisiert ist. Ein weiterer Doppelpfeil 84 bezeichnet die rückwärtige Brennweite der Linse 82. Demgemäß liegt eine rückwärtige Fokusebene 83 der Linse 82 in der Mitte des rautenförmigen Bereichs 81. Dieser wird durch die Linse 84 abgebildet, um das Intensitätsmaximum des Bessel-Strahls in die Fokusebene des Beleuchtungsobjektivs zu bringen. Der in Figur 12 gezeigte rautenförmige Bereich 81 repräsentiert somit die Schärfentiefe des Bessel-Strahls. Um das axiale Profil des Bessel-Strahls symmetrisch werden zu lassen, d.h. das Strahlprofil zu homogenisieren, kann in der in Figur 12 mit B bezeichneten Ebene eine Ringblende angeordnet werden.

Figur 13 zeigt eine alternative Ausführungsform, in der anstelle des konvexen Axicon 80 ein konkaves Axicon 86 verwendet wird. Durch das konkave Axicon 86 wird ein virtueller Bessel-Strahl erzeugt, dessen Intensitätsmaximum innerhalb des in Figur 13 mit 88 bezeichneten Bereichs liegt. Dort befindet sich wiederum die rückwärtige Fokusebene 83 der Linse 86. Die konkave Ausführung des Axicons 86 ermöglicht eine besonders raumsparende Anordnung.

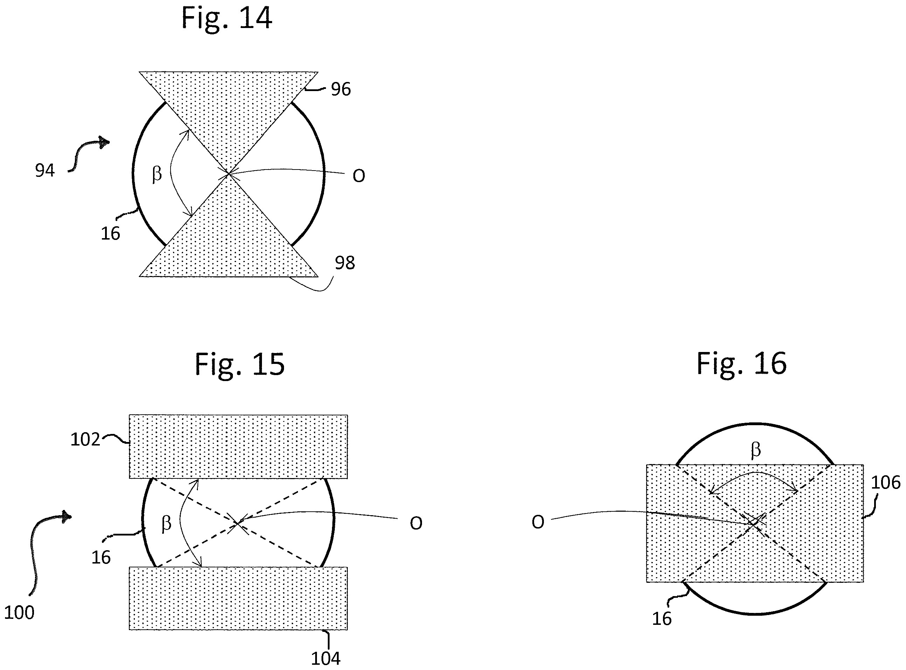

In den Figuren 14 bis 16 sind unterschiedliche Blendenanordnungen gezeigt, die in der Strahlquelle 76 nach Figur 11 im Zusammenwirken mit dem konvexen Axicon 82 (vgl. Figur 12) oder dem konkaven Axicon 86 (vgl. Figur 13) zur Erzeugung eines geschnittenen Bessel-Strahls verwendet werden kann.

Figur 14 zeigt eine Blende 94 in einer Draufsicht auf die optische Achse O, wobei die Blende 94 in den Darstellungen gemäß Figuren 12 oder 13 in der Ebene A oder der Ebene B angeordnet ist. Die Blende 94 ist aus zwei Blendenteilen 96 und 98 gebildet, die jeweils die geometrische Form eines Dreiecks haben. Die Blendenteile 96 und 98 sind einander derart zugewandt, dass die Spitzen ihrer Dreiecksformen in der Draufsicht nach Figur 14 auf der optischen Achse O liegen. Ein in Figur 14 dargestellter Winkel β ist ein Maß für die von dem Axicons 80 bzw. 86 genutzte Apertur.

Figur 15 zeigt in einer alternativen Ausführungsform eine Spaltblende 100, die aus zwei rechteckigen Blendenteilen 102 und 104 gebildet ist. Die beiden Blendenteile 102 und 104 sind in einem Abstand voneinander symmetrisch zur optischen Achse O angeordnet, wodurch ein Zwischenraum gebildet ist, innerhalb dessen der Bessel-Strahl propagiert. Der Winkel β kennzeichnet wiederum die von dem Axicon 80 bzw. 86 genutzte Apertur. Die Spaltblende 100 ist in den in den Figuren 12 und 13 gezeigten Anordnungen jeweils in der Ebene B angeordnet. Durch die Spaltblende 100 wird ein geschnittener Bessel-Strahl durch eine ringförmige Lichtverteilung generiert.

Figur 16 zeigt in einer weiteren alternativen Ausführungsform eine Blende 106, die aus einem einstückigen, rechteckförmigen Blendenteil gebildet ist, das auf der optischen Achse O angeordnet ist. Damit blockiert die Blende 106 einen achsennahen Teil der durch den Bessel-Strahl gebildeten Lichtverteilung. Dementsprechend wird der geschnittene Bessel-Strahl durch einen achsfernen Teil der Lichtverteilung generiert, der in Figur 16 oberhalb und unterhalb an der Blende 106 vorbeiläuft. Somit ergibt sich der geschnittene Bessel-Strahl wiederum eine ringförmige Lichtverteilung.

Die Blende 106 ist in den Anordnungen nach den Figuren 12 und 13 jeweils in der Ebene B angeordnet. Der Winkel β bezeichnet wieder die von dem Axicon 80 bzw. 86 genutzte Apertur.

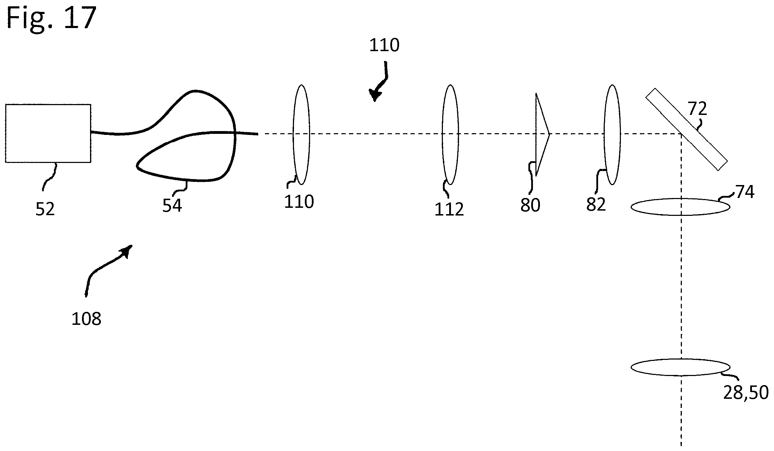

Figur 17 zeigt eine Strahlquelle 108, die beispielsweise in dem in den Figuren 5 und 6 gezeigten Lichtblattmikroskop 10c als Strahlquelle 14c oder in dem in den Figuren 7 und 8 gezeigten Lichtblattmikroskop 10d als Strahlquelle 14d verwendet werden kann.

Die Strahlquelle 108 nach Figur 17 ist ausgebildet, den Beleuchtungsstrahl 16 in Form eines Mathieu-Strahls zu erzeugen. Hierzu verfügt die Strahlquelle 108 über eine Strahlformoptik 110, die sich etwa von der in der Strahlquelle 76 gemäß Figur 11 verwendeten Strahlformoptik 78 dadurch unterscheidet, dass der aus zwei Linsen 110 und 112 gebildete Strahlaufweiter anamorphotisch ausgebildet ist, d.h. entlang zweier senkrecht zur optischen Achse liegende Achsen unterschiedliche Vergrößerungen aufweist. Demzufolge fällt der aus dem anamorphotischen Strahlaufweiter austretende Beleuchtungsstrahl 16 in Form eines elliptischen Gauß-Strahls auf das Axicon 80. Dieser elliptische Gauß-Strahl wird durch das Axicon 80 zu einem Mathieu-Strahl geformt, der dann in schon erläuterter Weise zur Lichtblatterzeugung genutzt werden kann.

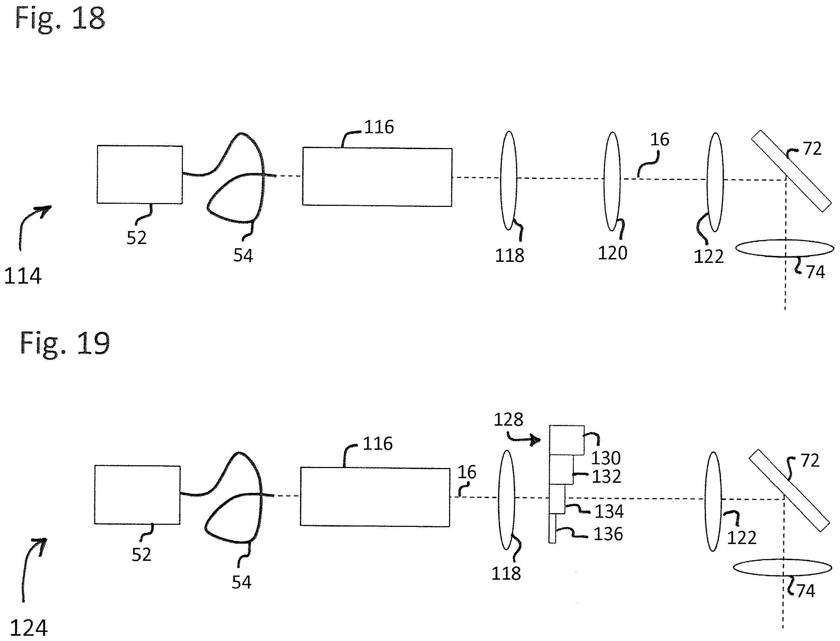

Figur 18 zeigt eine weitere Strahlquelle 114, die ausgebildet ist, den Schärfentiefenbereich des Beleuchtungsstrahls 16 innerhalb der Probe zu verschieben. Insoweit stellt die Ausführungsform nach Figur 18 eine Alternative zu der in Figur 7 gezeigten Lösung dar, bei der die Verschiebung des Schärfentiefenbereichs des Beleuchtungsstrahls 16 mit Hilfe des Beleuchtungsobjektivs 50 erfolgt. Während dort also die Verschiebung des Schärfentiefenbereichs über eine außerhalb der Strahlquelle vorgesehene Komponente erfolgt, ist bei der Ausführungsform nach Figur 18 diese technische Funktion durch die Strahlquelle 114 selbst realisiert.

Die Strahlquelle 114 enthält neben den schon erläuterten Komponenten wie der Laserlichtquelle 52, der Faserkopplung 54, dem y-Scanspiegel 72 und der Scanlinse 74 eine Strahlformoptik 116 sowie eine aus drei Linsen 118, 120 und 122 gebildete Linsenanordnung, die der Strahlformoptik 116 nachgeordnet ist. Als Strahlformoptik 116 kann wahlweise eine der in den Figuren 9 bis 17 beispielhaft dargestellten Optiken verwendet werden. Insbesondere kann also die Strahlformoptik 116 so ausgeführt sein, dass sie den Beleuchtungsstrahl 16 zu einem Bessel-Strahl, einem geschnittenen Bessel-Strahl oder einem Mathieu-Strahl formt. Jedoch ist die Strahlformoptik 116 nicht auf die Generierung der vorstehend genannten Strahlarten beschränkt. Insbesondere kann die Strahlformoptik 116 auch so ausgeführt sein, dass sie einen herkömmlichen Gauß-Strahl erzeugt.

Die der Strahlformoptik 114 nachgeordnete Linsenanordnung ist so gewählt, dass die beiden äußeren Linsen 118 und 122 längs der optischen Achse im Abstand der Summe ihrer Brennweiten positioniert sind. Dies bedeutet, dass zwischen den beiden Linsen 118 und 122 eine Ebene liegt, die sowohl von der Linse 118 als auch von der Linse 122 einen Abstand aufweist, der identisch mit der Brennweite der jeweiligen Linse 118 bzw. 122 ist. In dieser Ebene, die demnach eine gemeinsame Brennebene bildet, ist die mittlere Linse 120 angeordnet. Die Linse 120 ist als durchstimmbare Linse ausgeführt, d.h. als ein optisches Element, dessen optische Wirkung variabel steuerbar ist. Beispielsweise lässt sich die durchstimmbare Linse 120 als Elastomerlinse realisieren, deren Oberflächenkrümmung durch externe Aktuierung veränderbar ist, so dass die Brennweite der Linse steuerbar ist. Durch eine entsprechende Ansteuerung der durchstimmbaren Linse 120 lässt sich so der Beleuchtungsstrahl 16 nach Wunsch konvergent oder divergent machen, was zu einer entsprechenden Änderung des Schärfentiefenbereichs führt.

Mit Hilfe der Strahlquelle 114 kann der Schärfentiefenbereich des Beleuchtungsstrahls 16 so gesteuert werden, dass sich das innerhalb der Probe generierte Lichtblatt hinsichtlich Form, Ausdehnung und Lage variieren lässt. So ist der Schärfentiefenbereich des Beleuchtungsstrahls in herkömmlichen Anordnungen üblicherweise so eingestellt, dass das gesamte Bildfeld ausgeleuchtet wird. Das bedeutet, dass der Schärfentiefenbereich üblicherweise der Ausdehnung des Bildes längs der optischen Achse entspricht. Demgegenüber lässt sich die in Figur 18 dargestellte Strahlquelle 114 so steuern, dass der Beleuchtungsstrahl 16 stärker fokussiert, d.h. ein kleinerer Schärfentiefenbereich gewählt wird, so dass das resultierende Lichtblatt im Bereich seiner Taille dünner wird, während es von der Taille weg stärker divergiert, also dicker wird. Vorzugsweise wird dann detektorseitig nur Detektionslicht erfasst, das aus einem Probenstreifen stammt, der von der Taille des Lichtblatts beleuchtet wird.

Figur 19 zeigt eine Strahlquelle 124, die eine gegenüber der Anordnung nach Figur 18 abgewandelte Ausführungsform zur Verschiebung des Schärfentiefenbereichs des Beleuchtungsstrahls 16 darstellt. Die Strahlquelle 124 enthält anstelle der in Figur 18 vorgesehenen durchstimmbaren Linse 120 eine senkrecht zur optischen Achse verschiebbare Scheibe 128, die mehrerer transparente Blöcke 130, 132, 134 und 136 umfasst. Die transparenten Blöcke 130 bis 136 haben längs der optischen Achse unterschiedliche Dicken. Die Scheibe 128 ist mit Hilfe eines entsprechenden Antriebs senkrecht zur optischen Achse verschiebbar, so dass wahlweise einer der transparenten Blöcke 130 bis 136 in den Strahlengang des Beleuchtungsstrahls 16 eingebracht wird. Infolge ihrer unterschiedlichen axialen Dicken beeinflussen die transparenten Blöcke 130 bis 136 die optische Weglänge des Beleuchtungsstrahls 16 in unterschiedlicher Weise. Diese variierende Beeinflussung der optischen Weglänge kann genutzt werden, um den Schärfentiefenbereich des Beleuchtungsstrahls und damit die dem Schärfentiefenbereich entsprechende Taille des resultierenden Lichtblattes innerhalb der Probe zu verschieben.

In der Strahlquelle 124 nach Figur 19 sind die beiden Linsen 118 und 122 so voneinander beabstandet, dass sie näherungsweise ein telezentrisches System bilden. Um genau zu sein, ist der Abstand der beiden Linsen 118, 122 etwas größer gewählt als die Summe der Brennweiten der Linsen 118, 122. Der Abstand ist gerade so bemessen, dass für den Fall, dass sich ein transparenter Block mittlerer Dicke, z.B. der Block 134 im Strahlengang des Beleuchtungsstrahls 16 befindet, der in kollimierter Form in die Linse 118 eintretende Beleuchtungsstrahl 60 auch kollimiert aus der Linse 122 austritt. Befindet sich dagegen einer der beiden dickeren Blöcke 130, 132 im Strahlengang, so divergiert der Beleuchtungsstrahl 16 beim Austritt aus der Linse 122. Demgegenüber tritt er als konvergentes Lichtbündel aus der Linse 122 aus, wenn der dünnere Block 136 in den Strahlengang eingebracht ist.

Die mit den transparenten Blöcken 130 bis 136 versehene Scheibe 128 befindet sich in einem Bereich des Strahlengangs, in dem der Beleuchtungsstrahl 16 divergent oder konvergent, jedenfalls nicht kollimiert, ist.

Die in Figur 19 veranschaulichte Realisierung zur Beeinflussung der optischen Weglänge des Beleuchtungsstrahls 16 ist nur beispielhaft zu verstehen. So können etwa die transparenten Blöcke 130 und 136 in einer entsprechend modifizierten Realisierung beispielsweise auch auf einer Scheibe angeordnet sein, die um die optische Achse drehbar ist, um auf diese Weise wahlweise einen der Blöcke in den Strahlengang einzubringen.

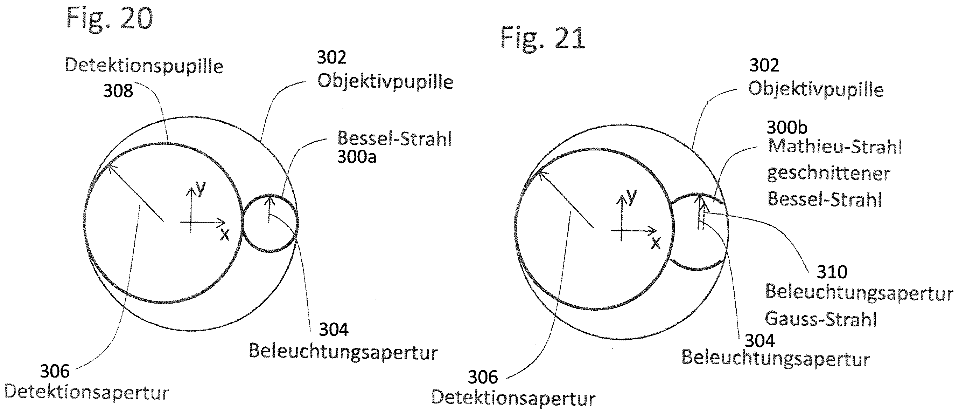

Die Figuren 20 und 21 zeigen Pupillendarstellungen, die den Vorteil der Verwendung eines Bessel-Strahls, eines geschnittenen Bessel-Strahls und eines Mathieu-Strahls gegenüber der Verwendung eines Gauß-Strahls veranschaulichen. Dabei wird in dem Beispiel nach den Figuren 20 und 21 davon ausgegangen, dass der jeweilige Beleuchtungsstrahl längs der x-Achse versetzt in die Objektivpupille 302 eingestrahlt wird und demnach nur einen außermittigen Teilbereich der Objektivpupille 302 ausleuchtet. Dieser Versatz in x-Richtung bestimmt die Verkippung der resultierenden Lichtblattebene gegenüber der optischen Achse.

In den Figuren 20 und 21 sind für die verschiedenen Strahltypen jeweils diejenigen Bereiche der Objektivpupille 302 dargestellt, die der Beleuchtungsapertur 304 und der Detektionsapertur 306 zugeordnet sind. Der durch die Beleuchtungsapertur 304 definierte Pupillenbereich wird im weiteren Beleuchtungspupille und der durch die Detektionsapertur 306 definierte Pupillenbereich als Detektionspupille bezeichnet.

In Figur 20 ist für einen Bessel-Strahl 300a dargestellt, wie dieser am Rand der Objektivpupille 302 derart platziert ist, dass die Beleuchtungspupille und die Detektionspupille die Ausdehnung der Objektivpupille 302 in x-Richtung vollständig nutzen. Die Länge des Pfeils kennzeichnet die maximale Beleuchtungsapertur. In Figur 21 ist der gleiche Sachverhalt für einen geschnittenen Bessel-Strahl bzw. einem Mathieu-Strahl 300b dargestellt, wobei in Figur 21 zusätzlich die maximale Beleuchtungsapertur 310 für einen Gauß-Strahl zum Vergleich angegeben ist. Wie aus der Darstellung nach Figur 21 hervorgeht, kann ein geschnittener Bessel-Strahl oder ein Mathieu-Strahl 300b bei größerer Beleuchtungsapertur näher am Rand der Objektivpupille 302 platziert werden. Mit anderen Worten kann bei größerer Beleuchtungsapertur ein Überlapp der Beleuchtungspupille mit der Detektionspupille vermieden werden. Im Ergebnis kann so entweder eine größere Detektionsapertur oder eine größere Beleuchtungsapertur genutzt werden.

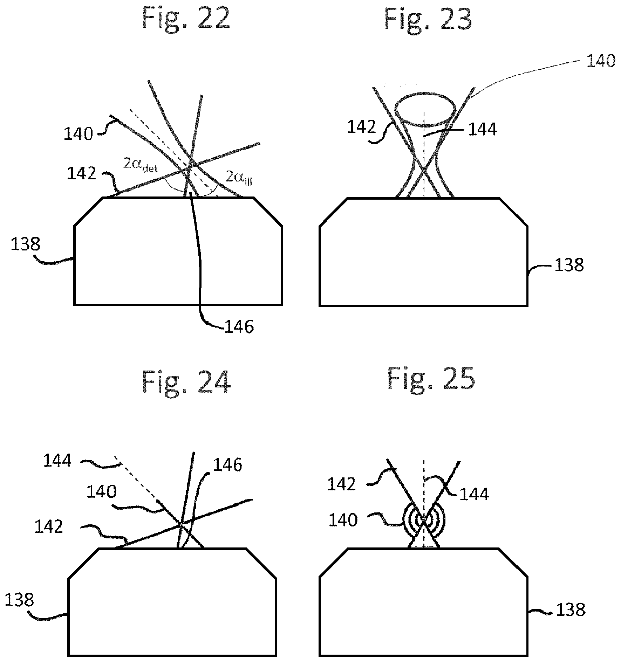

Der Vorteil, der sich aus der Beleuchtung mit einem Bessel-Strahl, insbesondere einem geschnittenen Bessel-Strahl und einem Mathieu-Strahl gegenüber eine Beleuchtung mit einem Gauß-Strahl ergibt, ist nochmals in den Figuren 22 bis 25 veranschaulicht. Dabei zeigen die Figuren 22 und 23 in zwei senkrecht zueinander liegenden Schnitten die Beleuchtung mit einem Gauß-Strahl, während die Figuren 24 und 25 in entsprechenden Schnitten die Beleuchtung mit einem geschnittenen Bessel-Strahl oder einem Mathieu-Strahl veranschaulichen.

In den Figuren 22 bis 25 sind jeweils ein Objektiv 138 sowie der jeweilige Querschnitt eines Beleuchtungsstrahls 140 sowie ein Detektionskonus 142 dargestellt. Der Beleuchtungsstrahl 140 ist in den Figuren 22 und 23 ein Gauß-Strahl und in den Figuren 24 und 25 ein geschnittener Bessel-Strahl oder ein Mathieu-Strahl.

Die Beleuchtung ist vorteilhafterweise so zu wählen, dass der Überlapp des jeweiligen Beleuchtungsstrahls 140 mit dem Detektionskegel 142 auf einen möglichst schmalen Bereich um die abzubildende Ebene, die in den Figuren 22 durch die mit 144 bezeichnete gestrichelte Linie angedeutet ist, beschränkt ist. Insbesondere ist in den Figuren 22 und 25 derjenige Bereich, in dem ein Überlapp zwischen dem Beleuchtungsstrahl 140 und dem Detektionskegel 142 zu vermeiden ist, mit 146 bezeichnet.

Wie eine Zusammenschau der Figuren 22 bis 25 zeigt, ist der vorstehend genannte Überlapp zwischen dem Beleuchtungsstrahl 140 und dem Detektionskegel 142 bei Verwendung eines geschnittenen Bessel-Strahls oder eines Mathieu-Strahls deutlich geringer als bei Verwendung eines Gauß-Strahls. Damit besteht für einen geschnittenen Bessel-Strahl oder einem Mathieu-Strahl deutlich mehr Spielraum, die Detektionsapertur zu erhöhen. Dabei ist die Detektionsapertur NA_{det} = n α_{det} bestimmt wobei der Öffnungswinkel 2α_{det} des Detektionskegels 142 zur Vereinfachung der Darstellung lediglich in Figur 22 angegeben ist. In Figur 22 ist zudem der Winkel 2αᵢₗₗ dargestellt, der ein Maß für die Beleuchtungsapertur darstellt. Die Aperturen von Beleuchtung und Detektion sind durch den Öffnungswinkel des Objektivs α mit NA = n sin α über 2α = 2αᵢₗₗ + 2α_{det} beschränkt.

Im Weiteren werden Ausführungsformen beschrieben, die darauf abzielen, mit zunehmender Eindringtiefe des Beleuchtungsstrahls in die Probe Verluste an Detektionslicht, die durch Streuung und Absorption auftreten, zu kompensieren. So sind in der herkömmlichen Mikroskopie, bei der die beleuchtete Ebene mit der Fokusebene des Detektionsobjektivs zusammenfällt, solche Verluste an Beleuchtungslicht über das Bildfeld relativ gering. Hingegen wird bei einem lichtblattmikroskopischen Verfahren wie OPM oder SCAPE für ein einzelnes Bild das Detektionslicht aus sehr unterschiedlichen Tiefen innerhalb der Probe erfasst. In diesem Fall kann es erforderlich sein, die mit zunehmender Lichteindringtiefe stärker werdenden Verluste an Beleuchtungslicht infolge von Streuung und Absorption zu kompensieren.

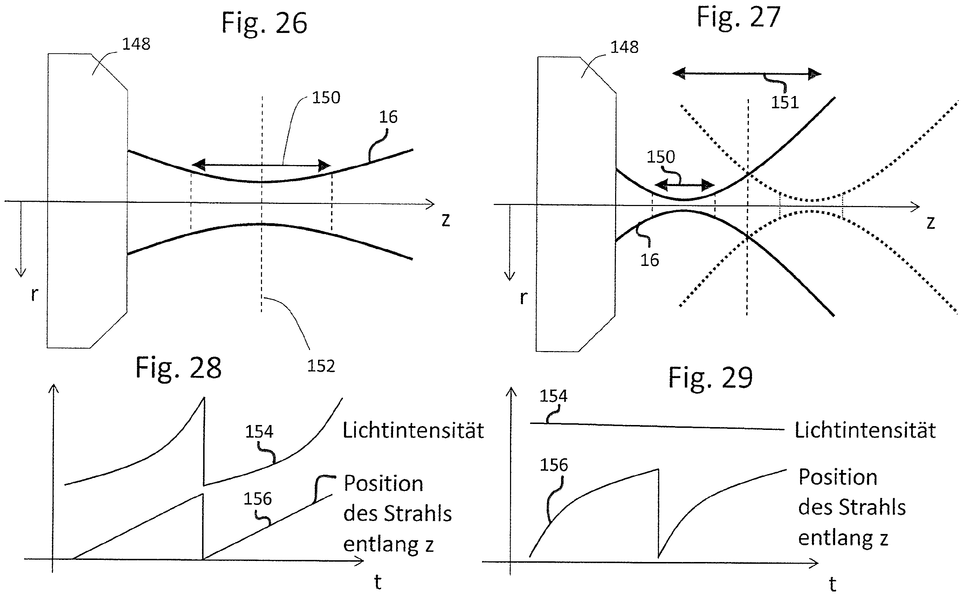

In den Figuren 26 bis 29 ist beispielhaft veranschaulicht, wie mit Hilfe einer Verschiebung des Schärfentiefenbereichs des Beleuchtungsstrahls 16, wie sie mittels der in den Figuren 4, 18 und 19 gezeigten Anordnungen möglich ist, eine Kompensation einer durch Streuung und/oder Absorption verursachten Abschwächung des Beleuchtungsstrahls 16 in Abhängigkeit der Lichteindringtiefe erreicht werden kann. Figur 26 zeigt ein Objektiv 148, durch das die Probe mit dem Beleuchtungsstrahl 16 beleuchtet wird. Der Beleuchtungsstrahl 16 weist einen Schärfentiefenbereich 150 auf, dessen Ausdehnung entlang der Beleuchtungsachse z in Figur 26 durch einen Doppelpfeil angedeutet ist. Innerhalb des Schärfentiefenbereichs 150 befindet sich die in Figur 26 mit 152 bezeichnete Fokusebene des Objektivs 148.

In Figur 27 ist zum einen dargestellt, wie durch eine stärkere Fokussierung des Beleuchtungsstrahls 16 dessen Schärfentiefenbereich 150 längs der Beleuchtungsachse z verkürzt werden kann. Entsprechend nimmt auch die in radialer Richtung r, d.h. senkrecht zur Beleuchtungsachse z gemessene Dicke des Beleuchtungsstrahls 16 ab. Im Ergebnis ergibt sich so ein deutlich dünneres Lichtblatt mit kürzerer Schärfentiefe.

Figur 27 veranschaulicht zum anderen, wie sich der Schärfentiefenbereich 152 längs der Beleuchtungsachse z verschieben lässt, um die Eindringtiefe, in der das Lichtblatt die Probe beleuchtet, zu variieren. Der Bereich, innerhalb dessen der Schärfentiefenbereich 150 längs der Beleuchtungsachse z verschoben wird, ist in Figur 27 durch mit 151 bezeichneten Doppelpfeil 151 angedeutet.

In Figur 28 ist ein Beispiel gezeigt, wie die axiale Verschiebung des Schärfentiefenbereichs 150 zur Abschwächungskompensation genutzt werden kann. Dabei gibt in Figur 28 eine Kurve 154 die Intensität des Beleuchtungsstrahls in Abhängigkeit der Zeit t an. Die darunter liegende, mit 156 bezeichnete Kurve bezeichnet demgegenüber die Position des Schärfentiefenbereichs 150 längs der Beleuchtungsachse z in Abhängigkeit der Zeit t, wobei ein Anstieg der Kurve 156 mit einer Verschiebung des Schärfentiefenbereichs 150 in Figur 27 von links nach rechts korrespondiert.

Wie der Verlauf der Kurve 156 in Figur 28 zeigt, wird in dem vorliegenden Beispiel der Schärfentiefenbereich 150 zunächst aus einer Anfangsposition mit konstanter Geschwindigkeit längs der Beleuchtungsachse z von dem Objektiv 148 weg in eine Endposition bewegt, anschließend aus dieser Endposition in die Anfangsposition zurückgesetzt und dann wieder aus der Anfangsposition mit derselben konstanten Geschwindigkeit in die Endposition bewegt. Dabei ist in Figur 27 der Schärfentiefenbereich 150 in der Anfangsposition mit durchgezogenen Linien und in der Endposition in gestrichelten Linien dargestellt.

Gemäß der der Kurve 154 wird die Intensität des Beleuchtungsstrahls 16 erhöht, während der Schärfentiefenbereich 150 aus seiner Anfangsposition längs der Beleuchtungsachse z in seine Endposition bewegt wird. In dem Beispiel nach Figur 28 steigt die Intensität exponentiell an. Dieser exponentielle Intensitätsanstieg spiegelt das sogenannte Lambert-Beersche Gesetz wider, das die Abschwächung der Intensität von elektromagnetischer Strahlung beim Durchgang durch ein Medium mit einer absorbierenden und/oder streuenden Substanz in Abhängigkeit der Konzentration dieser Substanz und der Eindringtiefe beschreibt. In einer einfacheren Realisierung kann jedoch auch ein linearer Intensitätsanstieg des Beleuchtungsstrahls vorgesehen sein.

Der Anstieg bzw. allgemein die Modulation entlang z kann insbesondere iterativ und adaptiv derart an das Objekt angepasst werden, dass die Signalstärke im Bild gleichmäßig entlang z ist. Dabei kann z.B. mindestens ein (Roh-)Bild ausgewertet werden, um das Strahlprofil dann in geeigneter Weise anzupassen und ein finales optimiertes Bild zu erzeugen und für den Nutzer zu speichern.

Um die in den Figuren 28 und 29 dargestellten Intensitätsverläufe einzustellen, wird die Laserlichtquelle, die den Beleuchtungsstrahl 16 emittiert, entsprechend zeitabhängig gesteuert.

Figur 29 zeigt ein abgewandeltes Ausführungsbeispiel zur Abschwächungskompensation. Wie die Kurve 154 in Figur 29 zeigt, wird in diesem Ausführungsbeispiel die Intensität des Beleuchtungsstrahls 16 über die gesamte Verschiebebewegung des Schärfentiefenbereichs 150 konstant gehalten. Demgegenüber wird die Geschwindigkeit variiert, mit welcher der Beleuchtungsstrahl 16 längs der Beleuchtungsachse z bewegt wird. Konkret nimmt dabei die Verschiebegeschwindigkeit mit zunehmender Eindringtiefe ab. Dies bedeutet, dass die Verweildauer des Beleuchtungsstrahls 16 mit der Eindringtiefe zunimmt, wodurch tiefer liegende Probenbereiche stärker beleuchtet werden.

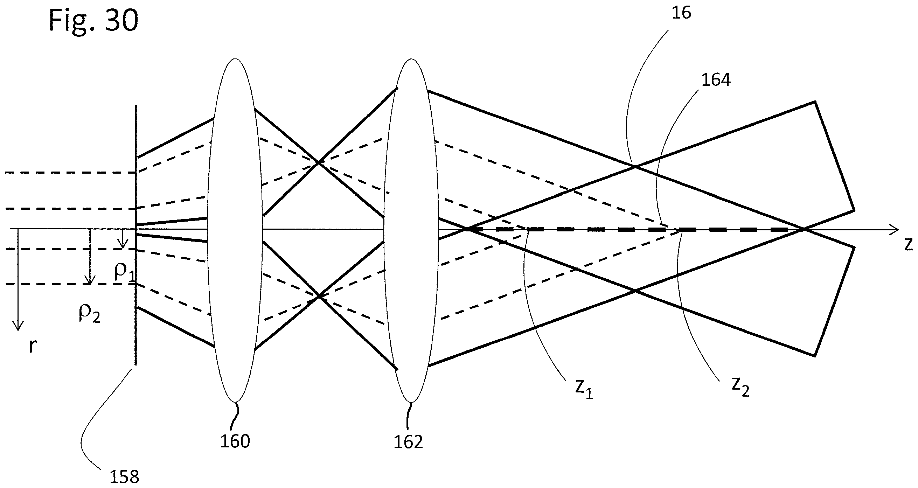

In Figur 30 ist veranschaulicht, wie durch die Beeinflussung des radialen Profils des Beleuchtungsstrahls 16 dessen Intensität längs der Beleuchtungsachse z zur Absorptionskompensation gesteuert werden kann. Dabei wird als Beleuchtungsstrahl 16 vorzugsweise ein Bessel-Strahl, ein geschnittener Bessel-Strahl oder ein Mathieu-Strahl verwendet. Zur Generierung der gewünschten Strahlform kann beispielsweise ein konvexes Axicon in einer Ebene 158 positioniert werden. Wie Figur 30 zeigt, ist dieser Ebene 158 eine Linse 160 sowie ein Objektiv 162 nachgeordnet. Zwischen der Linse 160 und dem Objektiv 162 kann eine beliebige Zahl telezentrischer Optiken und strahlablenkender Mittel angeordnet werden.

Um das radiale Profil des Beleuchtungsstrahls 16 zu beeinflussen, kann durch ein geeignetes Mittel, z.B. eine mit Ringsegmenten unterschiedlicher Transmission versehenen Maske, die Transmission des Beleuchtungsstrahls 16 in Abhängigkeit des radialen Abstandes r von der Beleuchtungsachse z so variiert werden, dass die Intensität des Beleuchtungsstrahls 16 längs der Beleuchtungsachse z in der gewünschten Weise eingestellt wird. Ist die Transmission beispielsweise so gewählt, dass sie bei einem radialen Abstand p1, dem auf der Beleuchtungsachse z eine Position z2 zugeordnet ist, größer ist als bei einem größeren radialen Abstand ρ2 , dem auf der Beleuchtungsachse eine Position z1 zugeordnet ist, so kann die Intensität des Beleuchtungsstrahls 16 in der axialen Position z2 gegenüber der Intensität in der Position z1 erhöht werden. Dabei sind Beugungseffekte zu berücksichtigen sowie die Tatsache, dass ein Ring mit Ringbreite dp eine Fläche A = 2 π ρ dp hat, die also mit ρ zunimmt. Für eine gleichförmige Intensität des Beleuchtungsstrahls auf der optischen Achse muss die Transmission der Ringsegmente also nach außen hin abnehmen. Unter Berücksichtigung des durch Streuung und/oder Absorption auftretenden Lichtverlusts kann so mittels einer geeigneten transmissionssteuernden Maske das radiale Profil des Beleuchtungsstrahls so eingestellt werden, dass die axiale Intensität des Beleuchtungsstrahls 16 längs der Beleuchtungsachse z gerade so stark zunimmt, dass die mit der Eindringtiefe zunehmenden Lichtverluste kompensiert sind.

Die in Figur 30 veranschaulichte Beleuchtung mittels eines Bessel-Strahls, einen geschnittenen Bessel-Strahls oder eines Mathieu-Strahls ist insbesondere in Verbindung mit einer konfokalen Liniendetektion gewinnbringend anwendbar.

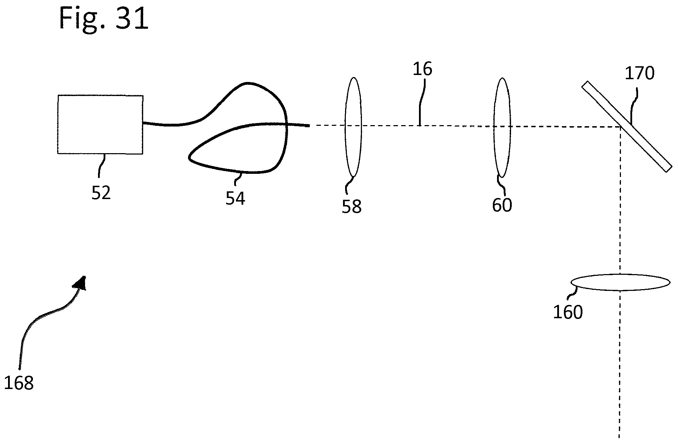

Figur 31 zeigt eine Strahlquelle 168, durch die das in Figur 30 veranschaulichte Beleuchtungsprinzip beispielhaft realisiert ist. Die Strahlquelle 168 nach Figur 31 weist neben der Laserlichtquelle 52, der Faserkopplung 54 und dem aus den beiden Linsen 58, 60 gebildeten Strahlaufweiter die auch in Figur 30 dargestellte Linse 160 sowie einen räumlichen Lichtmodulator 170 auf, durch den das vorstehend unter Bezugnahme auf Figur 30 erwähnte Axicon mitsamt der das radiale Strahlprofil steuernden Maske realisiert ist. Anstelle des räumlichen Lichtmodulators 170 kann auch eine Freiformlinse verwendet werden, deren Krümmungsradius mit dem radialen Abstand r variiert, um die axiale Intensität des Beleuchtungsstrahls 16 wie gewünscht zu steuern.

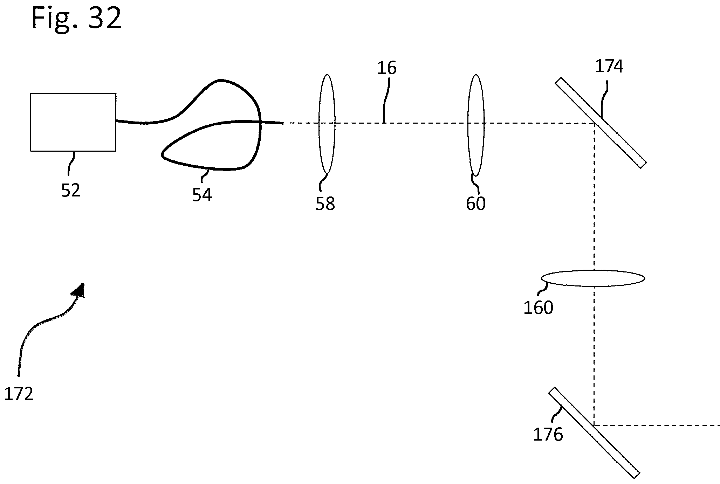

Figur 32 zeigt eine Strahlquelle 172, die eine gegenüber der Anordnung nach Figur 31 abgewandelte Ausführungsform zur Realisierung des in Figur 30 veranschaulichten Beleuchtungsprinzips darstellt. Die Strahlquelle 172 weist zwei räumliche Lichtmodulatoren 174 und 176 auf, von denen der erste Lichtmodulator 174 dazu dient, auf dem zweiten Lichtmodulator 176 eine passende Ausleuchtung für ein axial ansteigendes Strahlprofil zu erzeugen. Dabei moduliert der erste Lichtmodulator 174 die Phase des Beleuchtungsstrahls so, dass die Amplitude des Beleuchtungsstrahls 16 auf dem zweiten räumlichen Lichtmodulator wie gewünscht in Abhängigkeit des radialen Abstandes von der Beleuchtungsachse variiert. Der zweite räumliche Lichtmodulator 176, der sich unter Bezugnahme auf Figur 30 zwischen der Linse 160 und dem Objektiv 162 befindet, ist wiederum beispielsweise durch ein Axicon gebildet. Ausgehend von dem zweiten Lichtmodulator 176 propagiert der Beleuchtungsstrahl 16 z.B. über einen Scanspiegel zu dem Beleuchtungsobjektiv.

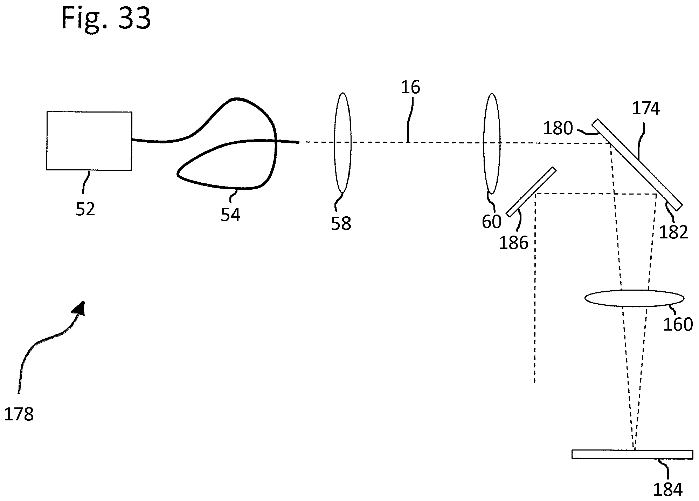

Figur 33 zeigt eine Strahlquelle 178, die gegenüber der Ausführungsform gemäß Figur 32 dadurch abgewandelt ist, dass anstelle der beiden separaten Lichtmodulatoren 174, 176 ein einziger räumlicher Lichtmodulator 178 vorgesehen ist, der zwei Modulatorbereiche 180 und 182 aufweist, von denen der erste Modulatorabschnitt 180 die Funktion des ersten Lichtmodulators 174 und der zweite Modulatorabschnitt 182 die Funktion des zweiten Lichtmodulators 176 übernimmt.

Der Beleuchtungsstrahl 16 fällt zunächst auf den ersten Modulatorabschnitt 180, tritt durch dann die Linse 160 und wird an einem Spiegel 184 in Richtung des zweiten Modulatorabschnitts reflektiert. Ausgehend von dem zweiten Modulatorabschnitt 182 propagiert der Beleuchtungsstrahl 16 zu einem weiteren Spiegel 186, der den Beleuchtungsstrahl 16 z.B. über einen Scanspiegel in Richtung des Beleuchtungsobjektivs reflektiert.

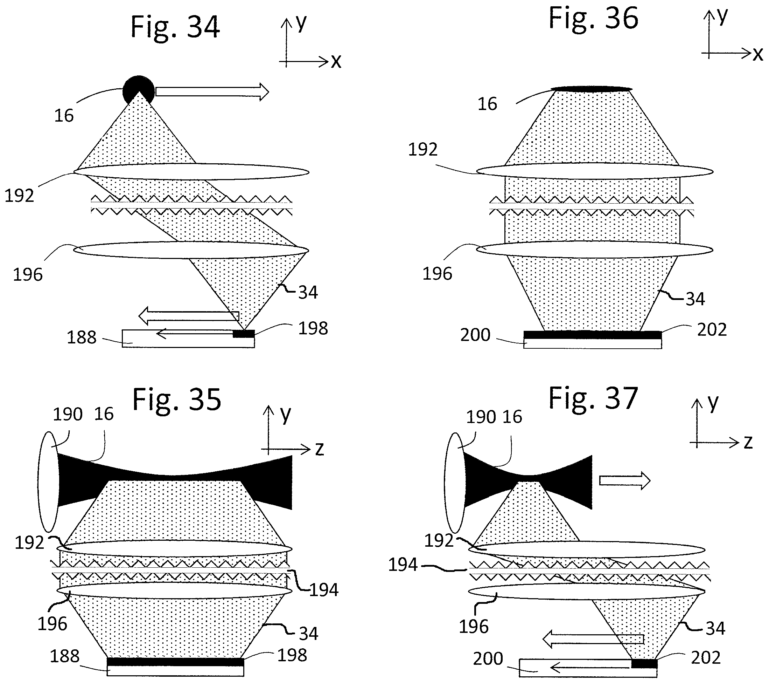

Die Figuren 34 und 35 zeigen eine Ausführungsform, in der ein Flächendetektor 188 mit Rolling-Shutter-Funktion zur Anwendung kommt. Dabei zeigt die Figur 34 die Anordnung in einem x-y-Schnitt und die Figur 35 in einem y-z-Schnitt. In der Ausführungsform gemäß den Figuren 34 und 35 sind für die Beleuchtung und Detektion separate Objektive vorgesehen, nämlich ein den Beleuchtungsstrahl 16 in die Probe fokussierendes Beleuchtungsobjektiv 190 und ein mit seiner optischen Achse zur optischen Achse des Beleuchtungsobjektivs 190 senkrecht angeordnetes Detektionsobjektiv 192. Die in den Figuren 34 und 35 dargestellte Anordnungweist ferner eine dem Detektionsobjektiv 192 nachgeordnete Aufrichtungseinheit 194 sowie eine dem Flächendetektor 188 vorgeordnete Tubuslinse 196 auf.

In der Ausführungsform nach den Figuren 34 und 35 wird der Beleuchtungsstrahl 16 quer zur Beleuchtungsachse z längs der x-Achse bewegt. Dementsprechend wird die Probe längs eines in Richtung der z-Achse verlaufenden Streifens, der gegenläufig längs der x-Achse bewegt wird, beleuchtet. Dies hat zur Folge, dass das Detektionslicht 34 auf dem Flächendetektor 188 einen entsprechenden Streifen erzeugt, der sich in Richtung der z-Achse erstreckt und sich längs der x-Achse über den Flächendetektor 188 bewegt.

Der Flächendetektor 188 verfügt über eine Rolling-Shutter-Funktion, d. h. er ist so ausgebildet, dass zu einem gegebenen Zeitpunkt jeweils nur ein streifenförmiger Bereich 198 des Flächendetektors 188, der sich in Richtung der z-Achse erstreckt, aktiv geschaltet und damit detektionswirksam ist. Der Flächendetektor 188 wird so angesteuert, dass sein aktiv geschalteter streifenförmiger Bereich 198 synchron mit dem auf den Flächendetektor 188 fallenden Detektionslichtstreifen längs der x-Achse bewegt wird.

Der Flächendetektor 188 kann so angesteuert werden, dass sein die Rolling-Shutter-Funktion realisierender streifenförmiger Bereich 198 in Richtung der x-Achse eine Breite von nur einem einzigen Pixel hat. In diesem Fall wirkt der Flächendetektor 188 wie ein (in Richtung der x-Achse bewegter) Zeilendetektor. Um eine bessere Ausbeute an Detektionslicht zu ermöglichen, kann der streifenförmige Bereich 198 des Flächendetektors 188 aber auch in Richtung der x-Achse eine Breite von mehreren Pixeln aufweisen. In jedem Fall lässt sich der streifenförmige Bereich 198 des Flächendetektors 188 vorteilhaft nach Art einer Schlitzblende nutzen, um eine zeilenweise Detektion zu realisieren. Die Breite, also Zahl der gleichzeitig aktiv geschalteten Zeilen, ist idealerweise frei einstellbar.

In einer besonders bevorzugten Ausführung ist der in der Anordnung gemäß den Figuren 34 und 35 verwendete Beleuchtungsstrahl ein Bessel-Strahl, ein geschnittener Bessel-Strahl oder ein Mathieu-Strahl. Mit Hilfe eines solchen Strahls, der durch eine der zuvor beschriebenen Strahlenquellen erzeugbar ist, kann der neben der Beleuchtungsachse z liegende Bereich gleichsam dazu genutzt werden, der Beleuchtungsachse z beispielsweise nach einer der in den Figuren 30 bis 33 gezeigten Lösungen Licht zuzuführen, was mit einem Gauß-Strahlnicht möglich ist. Letzterer hat ein schmales Winkelspektrum, das für eine hohe Schärfentiefe notwendig ist. Demgegenüber hat z.B. ein Bessel-Strahl Beiträge bei höheren radialen Komponenten im Winkelspektrum. Der streifenförmige Bereich des Flächendetektors 188 korrespondiert in diesem Fall z.B. mit der in Figur 30 angegebenen Linie 164. Er liegt also in einer zum Sensor konjugierten Ebene an einer Position entlang der x-Achse, die auf den Bereich 198 abgebildet wird.

In den Figuren 36 und 37 ist in einem x-y-Schnitt bzw. einem y-z-Schnitt eine abgewandelte Ausführungsform gezeigt, bei der ebenfalls ein Flächendetektor 200 mit Rolling-Shutter-Funktion zum Einsatz kommt. Im Unterschied zu der in den Figuren 34 und 35 dargestellten Ausführungsformen wird hier der Beleuchtungsstrahl 16 mit einer hohen numerischen Apertur und geringer Schärfentiefe erzeugt. Insoweit kann für diese Ausführungsform eine Art der Beleuchtung verwendet werden, wie sie weiter oben beispielhaft anhand der Figuren 26 bis 29 erläutert wurde.

In der in den Figuren 36 und 37 dargestellten Anordnung wird der Beleuchtungsstrahl 16 derart fokussiert, dass er in Richtung der Beleuchtungsachse z vergleichsweise kurz. In diesem Fall ist dann die Taille des Beleuchtungsstrahls 16 in Richtung der y-Achse, welche die Detektionsachse darstellt, vergleichsweise dünn.

Der mit dem Beleuchtungsstrahl 16 beleuchtete Probenbereich wird in Form eines in x-Richtung langgestreckten Streifens auf den Flächendetektor 200 abgebildet. Indem der Beleuchtungsstrahl 16 längs der z-Achse bewegt wird, wandert damit der Detektionslichtstreifen auf dem Flächendetektor 200 gegenläufig längs der z-Achse. Dementsprechend wird der Flächendetektor 200 so angesteuert, dass zu einem gegebenen Zeitpunkt nur ein streifenförmiger Bereich 202 des Flächendetektors 200, der sich längs der x-Achse erstreckt und in Richtung der z-Achse eine Breite von einem oder mehreren Pixeln aufweist, aktiv geschaltet und damit detektionswirksam ist. Dieser streifenförmige Bereich 202 des Flächendetektors 200 wird zur Realisierung der Rolling-Shutter-Funktion synchron mit der Bewegung des Beleuchtungsstrahls 16 längs der z-Achse verschoben.

Sämtliche vorgenannten Ausführungsbeispiele dienen allein der beispielhaften Erläuterung erfindungsgemäßer Strahlmodulationsmittel. Insbesondere ist darauf hinzuweisen, dass die vorstehend beschriebenen Mittel zur Strahlmodulation nicht auf diejenigen Ausführungsformen beschränkt sind, auf die in der Erläuterung dieser Mittel jeweils konkret Bezug genommen worden ist. So kann jedes Mittel auch mit anderen Ausführungsformen kombiniert werden. Außerdem können die verschiedenen Strahlmodulationsmittel selbst nach Bedarf miteinander kombiniert werden. So ist es beispielsweise möglich, eine Strahlmodulation, die durch Verschieben des Schärfentiefenbereichs des Beleuchtungsstrahls realisiert ist, mit einer Strahlmodulation zu kombinieren, die durch Steuerung des Strahlquerschnitts mittels einer der vorstehend beschrieben Strahlformoptiken erzielt wird.

## Patentansprüche

1. Lichtblattmikroskop (10a, 10b, 10c, 10d), umfassend:
eine Beleuchtungseinheit (12) mit einer Strahlquelle (14a, 14b, 14c, 14d), die ausgebildet ist, einen längs einer Beleuchtungsachse (z) propagierenden Beleuchtungsstrahl (16) auf eine Probe (30) zu richten,
ein Lichtblatterzeugungsmittel (20b, 62, 72), das ausgebildet ist, aus dem Beleuchtungsstrahl (16) eine die Probe (30) in einem Teilbereich beleuchtende, lichtblattartige Beleuchtungslichtverteilung zu erzeugen, und
eine Detektionseinheit (39) mit einem Detektor (44a, 44b, 44c), der ausgebildet ist, Detektionslicht (34) zu erfassen, das aus dem mit der Beleuchtungslichtverteilung beleuchteten Teilbereich der Probe (30) stammt,
**dadurch gekennzeichnet, dass** die Beleuchtungseinheit (12) ein Strahlmodulationsmittel (50, 52, 120, 128; 56, 75, 78, 110, 170, 174, 176) aufweist, das ausgebildet ist, den Beleuchtungsstrahl (16) längs der Beleuchtungsachse (z) durch Änderung der Beleuchtungsstärke und/oder der Belichtungsdauer derart zu modulieren, dass eine Variation der Belichtung des mit der Beleuchtungslichtverteilung beleuchteten Teilbereichs der Probe (30) längs der Beleuchtungsachse (z) so gewählt wird, dass sich über das detektierte Bildfeld eine möglichst konstante Helligkeit ergibt.

2. Lichtblattmikroskop (10a, 10b, 10c, 10d) nach einem der vorhergehenden Ansprüche, **dadurch gekennzeichnet, dass** das Strahlmodulationsmittel (50, 52, 120, 128) ausgebildet ist, einen Schärfentiefenbereich (150) des Beleuchtungsstrahl (16) längs der Beleuchtungsachse (z) zu verschieben.

3. Lichtblattmikroskop (10d) nach Anspruch 2, **dadurch gekennzeichnet, dass** das Strahlmodulationsmittel ein längs der Beleuchtungsachse (z) verschiebbares Beleuchtungsobjektiv (50) aufweist.

4. Lichtblattmikroskop (10a, 10b, 10c, 10d) nach Anspruch 2, **dadurch gekennzeichnet, dass** das Strahlmodulationsmittel eine in der Strahlquelle (14a, 14b, 14c, 14d) enthaltene durchstimmbare Linse (120) zum Verschieben des Schärfentiefenbereichs (150) des Beleuchtungsstrahls (16) aufweist.

5. Lichtblattmikroskop (10a, 10b, 10c, 10d) nach Anspruch 2, **dadurch gekennzeichnet, dass** das Strahlmodulationsmittel ein in der Strahlquelle (14a, 14b, 14c, 14d) enthaltenes optisches Element (128) zur Beeinflussung der optischen Weglänge des Beleuchtungsstrahls (16) aufweist.

6. Lichtblattmikroskop (10a, 10b, 10c, 10d) nach Anspruch 5, **dadurch gekennzeichnet, dass** das optische Element (128) mehrere, wahlweise in einen Strahlengang des Beleuchtungsstrahls (16) einbringbare transparente Blöcke (130, 132, 134, 136) umfasst, die längs der Beleuchtungsachse (z) unterschiedliche Dicken aufweisen.

7. Lichtblattmikroskop (10a, 10b, 10c, 10d) nach einem der Ansprüche 2 bis 6, **dadurch gekennzeichnet, dass** das Strahlmodulationsmittel (50, 52, 120, 128) ausgebildet ist, die Intensität des Beleuchtungsstrahls (16) in Abhängigkeit der Position des Schärfentiefenbereichs (150) längs der Beleuchtungsachse (z) zu modulieren.

8. Lichtblattmikroskop (10a, 10b, 10c, 10d) nach Anspruch 7, **dadurch gekennzeichnet, dass** das Strahlmodulationsmittel (50, 52, 120, 128) ausgebildet ist, die Intensität des Beleuchtungsstrahls (16) mit zunehmender Eindringtiefe des Schärfentiefenbereichs (150) in die Probe (30) zu erhöhen.

9. Lichtblattmikroskop (10a, 10b, 10c, 10d) nach einem der Ansprüche 2 bis 8, **dadurch gekennzeichnet, dass** das Strahlmodulationsmittel (50, 52, 120, 128) ausgebildet ist, die Verschiebegeschwindigkeit des Schärfentiefenbereichs (150) des Beleuchtungsstrahls (16) in Abhängigkeit von dessen Position längs der Beleuchtungsachse (z) zu variieren.

10. Lichtblattmikroskop (10a, 10b, 10c, 10d) nach Anspruch 9, **dadurch gekennzeichnet, dass** das Strahlmodulationsmittel (50, 52, 120, 128) ausgebildet ist, die Verschiebegeschwindigkeit des Schärfentiefenbereichs des Beleuchtungsstrahls (16) mit zunehmender Eindringtiefe in die Probe (30) zu verringern.

11. Lichtblattmikroskop (10a, 10b, 10c, 10d) nach einem der vorhergehenden Ansprüche, **dadurch gekennzeichnet, dass** das Strahlmodulationsmittel als Strahlformoptik (56, 75, 78, 110, 170, 174, 176) ausgebildet ist, die zur Modulation des Beleuchtungsstrahls (16) längs der Beleuchtungsachse (z) dessen radiales Intensitätsprofil in mindestens einer Richtung senkrecht zur Beleuchtungsachse (z) beeinflusst.

12. Lichtblattmikroskop (10a, 10b, 10c, 10d) nach Anspruch 11, **dadurch gekennzeichnet, dass** die Strahlformoptik (56, 75, 78, 110, 170, 174, 176) ausgebildet ist, die Transmission des Beleuchtungsstrahls (16) in Abhängigkeit des radialen Abstands von der Beleuchtungsachse (z) so einzustellen, dass die Intensität des Beleuchtungsstrahls (16) längs der Beleuchtungsachse (z) zunimmt.

13. Lichtblattluoreszenzmikroskop (10a, 10b, 10c, 10d) nach Anspruch 11 oder 12, **dadurch gekennzeichnet, dass** die Strahlformoptik zwei phasenmodulierende Elemente (174, 176) umfasst, von denen ein erstes Element (174) die Phase des Beleuchtungsstrahls (16) derart einstellt, dass der Beleuchtungsstrahl (16) an dem zweiten Element (176) eine Amplitude mit einem vorbestimmten, vorzugsweise radial ansteigenden Profil aufweist.

14. Lichtblattmikroskop (10a, 10b, 10c, 10d) nach Anspruch 13, **dadurch gekennzeichnet, dass** die beiden phasenmodulierende Elemente an einem einstückigen Bauelement (178) ausgebildet sind, wobei der an dem ersten pahsenmodulierenden Element reflektierte Beleuchtungsstrahl (16) über einen Spiegel (184) auf das zweite phasenmodulierende Element zurück geführt wird.

15. Verfahren zur mikroskopischen Abbildung einer Probe (30), bei dem ein längs einer Beleuchtungsachse (z) propagierender Beleuchtungsstrahl (16) auf die Probe (30) gerichtet wird,
aus dem Beleuchtungsstrahl (16) eine die Probe (30) in einem Teilbereich beleuchtende, lichtblattartige Beleuchtungslichtverteilung erzeugt wird, und
Detektionslicht (34) erfasst wird, das aus dem mit der Beleuchtungslichtverteilung beleuchteten Teilbereich der Probe (30) stammt,
**dadurch gekennzeichnet, dass** der Beleuchtungsstrahl (16) längs der Beleuchtungsachse (z) durch Änderung der Beleuchtungsstärke und/oder der Belichtungsdauer derart moduliert wird, dass eine Variation der Belichtung des mit der Beleuchtungslichtverteilung beleuchteten Teilbereichs der Probe (30) längs der Beleuchtungsachse (z) so gewählt wird, dass sich über das detektierte Bildfeld eine möglichst konstante Helligkeit ergibt.

16. Verfahren nach Anspruch 15, **dadurch gekennzeichnet, dass** die Beleuchtungslichtverteilung zur nichtlinearen Fluoreszenzanregung der Probe (30) verwendet wird.

## Claims

1. A light sheet microscope (10a, 10b, 10c, 10d) comprising:
an illumination unit (12) having a beam source (14a, 14b, 14c, 14d) which is configured to direct an illumination beam (16) propagating along an illumination axis (z) onto a sample (30),
light-sheet generating means (20b, 62, 72) which are configured to generate a light-sheet-like illumination light distribution illuminating the sample (30) in a partial area from the illumination beam (16), and
a detection unit (39) having a detector (44a, 44b, 44c) which is configured to capture detection light (34) originating from the partial area of the sample (30) illuminated with the illumination light distribution, **characterized in that** the illumination unit (12) comprises beam modulation means (50, 52, 120, 128; 56, 75, 78, 110, 170, 174, 176) configured to modulate the illumination beam (16) along the illumination axis (z) by changing the illumination intensity and/or the illumination time such that a variation of the illumination of the partial area of the sample (30) illuminated with the illumination light distribution is chosen such along the illumination axis (z) that there results a brightness as constant as possible over the detected image field.

2. The light sheet microscope (10a, 10b, 10c, 10d) according to any one of the preceding claims, **characterized in that** the beam modulating means (50, 52 120, 128) are configured to move a depth of focus area (150) of the illumination beam (16) along the illumination axis (z).

3. The light-sheet microscope (10a, 10b, 10c, 10d) according to claim 2, **characterized in that** the beam modulating means have an illumination objective (50) that is displaceable along the illumination axis (z).

4. The light sheet microscope (10a, 10b, 10c, 10d) according to claim 2, **characterized in that** the beam modulating means comprise a tunable lens (120) included in the beam source (14a, 14b, 14c, 14d) for moving the depth of focus area (150) of the illumination beam (16).

5. The light-sheet microscope (10a, 10b, 10c, 10d) according to claim 2, **characterized in that** the beam modulating means have an optical element (128) included in the beam source (14a, 14b, 14c, 14d) for influencing the optical path length of the illumination beam (16).

6. The light-sheet microscope (10a, 10b, 10c, 10d) according to claim 5, **characterized in that** the optical element (128) comprises several transparent blocks (130, 132, 134, 136) that are optionally introducible into a beam path of the illumination beam (16), the several transparent blocks having different thicknesses along the illumination axis (z).

7. The light sheet microscope (10a, 10b, 10c, 10d) according to any one of the claims 2 to 6, **characterized in that** the beam modulating means (50, 52, 120, 128) are configured to modulate the intensity of the illumination beam (16) depending on the position of the depth of focus area (150) along the illumination axis (z).

8. The light sheet microscope (10a, 10b, 10c, 10d) according to claim 7, **characterized in that** the beam modulating means (50, 52, 120, 128) are configured to increase the intensity of the illumination beam (16) with increasing depth of penetration of the depth of focus area (150) in the sample (30).

9. The light sheet microscope (10a, 10b, 10c, 10d) according to any one of the claims 2 to 8, **characterized in that** the beam modulating means (50, 52, 120, 128) are configured to vary the displacement speed of the depth of focus area (150) of the illumination beam (16) depending on its position along the illumination axis (z).

10. The light sheet microscope (10a, 10b, 10c, 10d) according to claim 9, **characterized in that** the beam modulating means (50, 52, 120, 128) are configured to reduce the displacement speed of the depth of focus area of the illumination beam (16) with increasing depth of penetration into the sample (30).

11. The light-sheet microscope (10a, 10b, 10c, 10d) according to any one of the preceding claims, **characterized in that** the beam modulating means are configured as beam shaping optics (56, 75, 78, 110, 170, 174, 176) which influence a radial intensity profile of the illumination beam (16) in at least one direction perpendicular to the illumination axis (z) for modulating the illumination beam (16) along the illumination axis (z) .

12. The light sheet microscope (10a, 10b, 10c, 10d) according to claim 11, **characterized in that** the beam shaping optics (56, 75, 78, 110, 170, 174, 176) are configured to adjust the transmission of the illumination beam (16) depending on the radial distance from the illumination axis (z) in such a way that the intensity of the illumination beam (16) increases along the illumination axis (z).

13. The light sheet microscope (10a, 10b, 10c, 10d) according to claim 11 or 12, **characterized in that** the beam shaping optics comprise two phase-modulating elements (174, 176), of which a first phase-modulating element (174) adjusts the phase of the illumination beam (16) in such a way that the illumination beam (16) has an amplitude with a predetermined, preferably radially rising profile on the second element (176).

14. The light-sheet microscope (10a, 10b, 10c, 10d) according to claim 13, **characterized in that** the two phase-modulating elements are formed on a one-piece component (178), wherein the illumination beam (16) reflected on the first phase-modulating element is fed back to the second phase-modulating element via a mirror (184) .

15. A method for microscopically imaging a sample (30), wherein
an illumination beam (16) propagating along an illumination axis (z) is directed onto the sample (30), a light-sheet-like illumination light distribution illuminating the sample (30) in a partial area is generated from the illumination beam (16), and
detection light originating from the partial area of the sample (30) illuminated with the illumination light distribution is detected,
**characterized in that** the illumination beam (16) is modulated along the illumination axis (z) by changing the illumination intensity and/or the illumination time such that a variation of the illumination of the partial area of the sample (30) illuminated with the illumination light distribution is chosen such along the illumination axis (z) that there results a brightness as constant as possible over the detected image field.

16. The method according to claim 15, **characterized in that** the illumination light distribution is used for nonlinear fluorescence excitation of the sample (30).

## Revendications

1. Microscope à feuille de lumière (10a, 10b, 10c, 10d), comprenant :
une unité d'éclairage (12) pourvue d'une source de faisceaux (14a, 14b, 14c, 14d) qui est réalisée pour diriger un faisceau d'éclairage (16) se propageant le long d'un axe d'éclairage (z) sur un échantillon (30),
un moyen de génération de feuille de lumière (20b, 62, 72) qui est réalisé pour générer à partir du faisceau d'éclairage (16) une distribution de lumière d'éclairage de type feuille de lumière, éclairant l'échantillon (30) dans une zone partielle, et
une unité de détection (39) pourvue d'un détecteur (44a, 44b, 44c) qui est réalisé pour détecter une lumière de détection (34) qui provient de la zone partielle de l'échantillon (30) éclairée par la distribution de lumière d'éclairage,
**caractérisé en ce que** l'unité d'éclairage (12) présente un moyen de modulation de faisceau (50, 52, 120, 128 ; 56, 75, 78, 110, 170, 174, 176) qui est réalisé pour moduler le faisceau d'éclairage (16) le long de l'axe d'éclairage (z) par une modification de l'intensité d'éclairage et/ou de la durée d'exposition de telle sorte qu'une variation de l'exposition de la zone partielle de l'échantillon (30) éclairée par la distribution de lumière d'éclairage le long de l'axe d'éclairage (z) est sélectionnée de telle sorte qu'il en résulte une luminosité aussi constante que possible dans le champ d'image détecté.

2. Microscope à feuille de lumière (10a, 10b, 10c, 10d) selon l'une quelconque des revendications précédentes, **caractérisé en ce que** le moyen de modulation de faisceau (50, 52, 120, 128) est réalisé pour décaler une zone de profondeur de champ (150) du faisceau d'éclairage (16) le long de l'axe d'éclairage (z).

3. Microscope à feuille de lumière (10d) selon la revendication 2, **caractérisé en ce que** le moyen de modulation de faisceau présente un objectif d'éclairage (50) pouvant être décalé le long de l'axe d'éclairage (z) .

4. Microscope à feuille de lumière (10a, 10b, 10c, 10d) selon la revendication 2, **caractérisé en ce que** le moyen de modulation de faisceau présente une lentille à fréquence variable (120) contenue dans la source de faisceaux (14a, 14b, 14c, 14d) pour décaler la plage de profondeur de champ (150) du faisceau d'éclairage (16).

5. Microscope à feuille de lumière (10a, 10b, 10c, 10d) selon la revendication 2, **caractérisé en ce que** le moyen de modulation de faisceau présente un élément optique (128) contenu dans la source de faisceaux (14a, 14b, 14c, 14d) pour influencer le chemin optique du faisceau d'éclairage (16).

6. Microscope à feuille de lumière (10a, 10b, 10c, 10d) selon la revendication 5, caractérisé en ce l'élément optique (128) comprend plusieurs blocs transparents (130, 132, 134, 136) pouvant être insérés au choix dans une trajectoire du faisceau d'éclairage (16) et qui présentent des épaisseurs différentes le long de l'axe d'éclairage (z).

7. Microscope à feuille de lumière (10a, 10b, 10c, 10d) selon l'une quelconque des revendications 2 à 6, **caractérisé en ce que** le moyen de modulation de faisceau (50, 52, 120, 128) est réalisé pour moduler l'intensité du faisceau d'éclairage (16) en fonction de la position de la plage de profondeur de champ (150) le long de l'axe d'éclairage (z).

8. Microscope à feuille de lumière (10a, 10b, 10c, 10d) selon la revendication 7, **caractérisé en ce que** le moyen de modulation de faisceau (50, 52, 120, 128) est réalisé pour augmenter l'intensité du faisceau d'éclairage (16) lorsque la profondeur de pénétration de la plage de profondeur de champ (150) dans l'échantillon (30) augmente.

9. Microscope à feuille de lumière (10a, 10b, 10c, 10d) selon l'une quelconque des revendications 2 à 8, **caractérisé en ce que** le moyen de modulation de faisceau (50, 52, 120, 128) est réalisé pour faire varier la vitesse de décalage de la plage de profondeur de champ (150) du faisceau d'éclairage (16) en fonction de la position de celui-ci le long de l'axe d'éclairage (z).

10. Microscope à feuille de lumière (10a, 10b, 10c, 10d) selon la revendication 9, **caractérisé en ce que** le moyen de modulation de faisceau (50, 52, 120, 128) est réalisé pour réduire la vitesse de décalage de la plage de profondeur de champ du faisceau d'éclairage (16) lorsque la profondeur de pénétration dans l'échantillon (30) augmente.

11. Microscope à feuille de lumière (10a, 10b, 10c, 10d) selon l'une quelconque des revendications précédentes, **caractérisé en ce que** le moyen de modulation de faisceau est réalisé sous la forme d'une optique de mise en forme de faisceau (56, 75, 78, 110, 170, 174, 176) qui, pour la modulation du faisceau d'éclairage (16) le long de l'axe d'éclairage (z), influence le profil d'intensité radial de celui-ci dans au moins une direction perpendiculaire à l'axe d'éclairage (z).

12. Microscope à feuille de lumière (10a, 10b, 10c, 10d) selon la revendication 11, **caractérisé en ce que** l'optique de mise en forme de faisceau (56, 75, 78, 110, 170, 174, 176) est réalisée pour régler la transmission du faisceau d'éclairage (16) en fonction de la distance radiale de l'axe d'éclairage (z) de telle sorte que l'intensité du faisceau d'éclairage (16) augmente le long de l'axe d'éclairage (z).

13. Microscope à fluorescence à feuille de lumière (10a, 10b, 10c, 10d) selon la revendication 11 ou 12, **caractérisé en ce que** l'optique de mise en forme de faisceau comprend deux éléments de modulation de phase (174, 176) dont un premier élément (174) règle la phase du faisceau d'éclairage (16) de telle sorte que le faisceau d'éclairage (16) présente au niveau du deuxième élément (176) une amplitude ayant un profil prédéterminé, de préférence radialement montant.

14. Microscope à feuille de lumière (10a, 10b, 10c, 10d) selon la revendication 13, **caractérisé en ce que** les deux éléments de modulation de phase sont réalisés sur un composant monobloc (178), dans lequel le faisceau d'éclairage (16) réfléchi sur le premier élément de modulation de phase est renvoyé par un miroir (184) sur le deuxième élément de modulation de phase.

15. Procédé permettant de former une image microscopique d'un échantillon (30), dans lequel
un faisceau d'éclairage (16) se propageant le long d'un axe d'éclairage (z) est dirigé sur l'échantillon (30),
une distribution de lumière d'éclairage de type feuille de lumière, éclairant l'échantillon (30) dans une zone partielle, est générée à partir du faisceau d'éclairage (16), et
une lumière de détection (34) est détectée qui provient de la zone partielle de l'échantillon (30) éclairée par la distribution de lumière d'éclairage,
**caractérisé en ce que** le faisceau d'éclairage (16) est modulé le long de l'axe d'éclairage (z) par une modification de l'intensité d'éclairage et/ou de la durée d'exposition de telle sorte qu'une variation de l'exposition de la zone partielle de l'échantillon (30) éclairée par la distribution de lumière d'éclairage le long de l'axe d'éclairage (z) est choisie de telle sorte qu'il en résulte une luminosité aussi constante que possible dans le champ d'image détecté.

16. Procédé selon la revendication 15, **caractérisé en ce que** la distribution de lumière d'éclairage est utilisée pour l'excitation en fluorescence non linéaire de l'échantillon (30).
